# EUROPEAN PATENT APPLICATION

(11) **EP 4 518 394 A1**
(43) Date of publication of application: **05.03.2025**
(21) Application number: 22940198.9
(22) Date of filing: 27.04.2022
(51) Int. Cl.: H04W 16/26, H04W 16/28

(54) **WIRELESS RELAY DEVICE, BASE STATION AND WIRELESS RELAY METHOD**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); SUN, Weiqi, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2022/019209
(87) International publication number: WO 2023/209921

(57) **Abstract**

A wireless relay device includes a communication unit that relays an uplink radio signal; a receiving unit that receives, on a downlink, information indicating a transmission beam of the uplink radio signal; and a control unit that determines the transmission beam of the uplink radio signal based on the information indicating the transmission beam of the uplink radio signal.

## Description

### Technical Field

The present invention relates to a wireless relay device, a base station, and a wireless relay method in a wireless communication system.

### Background Art

In new radio (NR) (also referred to as "5G"), which is a succeeding system of LTE (Long Term Evolution), a technology that satisfies a large-capacity system, a high-speed data transmission speed, a low delay, simultaneous connection of a large number of terminals, a low cost, power saving, and the like as requirement conditions has been studied (for example, Non-Patent Literature 1).

In the next generation communication, use of a high frequency band is expected. Improvement in communication quality is required from the viewpoint of a decrease in the number of scatterers, a decrease in the shadowing effect, an increase in distance attenuation, and the like due to the characteristics of the high frequency band. It is assumed that beam control, environment, and the like that ensure communication quality are required.

For example, in a high frequency band, there is a problem that a dead zone is likely to occur due to strong rectilinearity of radio waves or the like. Therefore, a method of improving communication quality in a multipath environment using a wireless relay device, such as a passive repeater or an active reflector (reconfigurable intelligent surface (RIS)); a smart repeater that receives, amplifies, and re-radiates a signal; or the like has been tried (for example, Non-Patent Literature 2).

### Citation List

### Non-Patent Literature

Non-Patent Literature 1: 3GPP TS 38.300 V16.7.0(2021-09)
Non-Patent Literature 2: NTT DOCOMO, "White Paper 5G Acceleration and 6G" (2021-02, 3.0 edition) Internet <URL: https://www.nttdocomo.co.jp/binary/pdf/corporate/technology /whitepaper_6g/DOCOMO_6G_White_PaperJP_20210203.pdf>

### Summary of Invention

### Technical Problem

In the related art, since a method for appropriately controlling a beam when a wireless relay device transmits an uplink radio signal is not defined, there is a problem that appropriate beam control in transmission of the uplink radio signal may not be achieved.

The present invention has been made in view of the above points, and an object thereof is to achieve appropriate beam control in reception of an uplink radio signal by a wireless relay device.

### Solution to Problem

According to the disclosed technology, provided is a wireless relay device including: a communication unit that relays an uplink radio signal; a receiving unit that receives, on a downlink, information indicating a transmission beam of the uplink radio signal; and a control unit that determines the transmission beam of the uplink radio signal based on the information indicating the transmission beam of the uplink radio signal.

### Advantageous Effects of Invention

According to the disclosed technology, provided is a technology capable of achieving appropriate beam control in reception of an uplink radio signal by a wireless relay device.

### Brief Description of Drawings

[Fig. 1] Fig. 1 is a diagram illustrating a wireless communication system according to an embodiment of the present invention.
[Fig. 2] Fig. 2 is a diagram illustrating an example of a functional configuration of a base station according to the embodiment of the present invention.
[Fig. 3] Fig. 3 is a diagram illustrating an example of a functional configuration of a terminal according to the embodiment of the present invention.
[Fig. 4] Fig. 4 is a diagram illustrating an example of a functional configuration of a wireless relay device according to the embodiment of the present invention.
[Fig. 5] Fig. 5 is a diagram illustrating an example of an operation example of the wireless relay device according to the embodiment of the present invention.
[Fig. 6] Fig. 6 is a diagram illustrating an example of communication in a high frequency band.
[Fig. 7] Fig. 7 is a diagram illustrating an example of a reflective wireless relay device according to the embodiment of the present invention.
[Fig. 8] Fig. 8 is a diagram illustrating an example of a transmissive wireless relay device according to the embodiment of the present invention.
[Fig. 9] Fig. 9 is a diagram illustrating a downlink transmission beam and a downlink reception beam.
[Fig. 10] Fig. 10 is a diagram illustrating an uplink transmission beam and an uplink reception beam.
[Fig. 11] Fig. 11 is a diagram illustrating three cases regarding the downlink reception beam received by the wireless relay device.
[Fig. 12] Fig. 12 is a diagram illustrating three cases regarding the uplink transmission beam transmitted by the wireless relay device.
[Fig. 13] Fig. 13 is a first view for explaining terms according to the embodiment of the present invention.
[Fig. 14] Fig. 14 is a second view for explaining terms according to the embodiment of the present invention.
[Fig. 15] Fig. 15 is a diagram illustrating the operation of a wireless relay device according to Example 1 of the embodiment of the present invention.
[Fig. 16] Fig. 16 is a diagram illustrating an uplink transmission beam according to Option 1 of Example 1 of the embodiment of the present invention.
[Fig. 17] Fig. 17 is a diagram illustrating an uplink transmission beam according to Option 2 of Example 1 of the embodiment of the present invention.
[Fig. 18] Fig. 18 is a diagram illustrating an uplink transmission beam according to Option 3-1 of Example 1 of the embodiment of the present invention.
[Fig. 19] Fig. 19 is a diagram illustrating an uplink transmission beam according to Option 3-2 of Example 1 of the embodiment of the present invention.
[Fig. 20] Fig. 20 is a diagram illustrating an uplink transmission beam according to Option 3-3 of Example 1 of the embodiment of the present invention.
[Fig. 21] Fig. 21 is a diagram illustrating an uplink transmission beam according to Option 1 of Example 2 of the embodiment of the present invention.
[Fig. 22] Fig. 22 is a diagram illustrating an uplink transmission beam according to Option 2 of Example 2 of the embodiment of the present invention.
[Fig. 23] Fig. 23 is a diagram illustrating an uplink transmission beam according to Option 3 of Example 2 of the embodiment of the present invention.
[Fig. 24] Fig. 24 is a first diagram illustrating an uplink transmission beam according to Option 4 of Example 2 of the embodiment of the present invention.
[Fig. 25] Fig. 25 is a second diagram illustrating an uplink transmission beam according to Option 4 of Example 2 of the embodiment of the present invention.
[Fig. 26] Fig. 26 is a diagram illustrating an uplink transmission beam according to Modification 1 of the embodiment of the present invention.
[Fig. 27] Fig. 27 is a diagram illustrating an uplink transmission beam according to Modification 2 of the embodiment of the present invention.
[Fig. 28] Fig. 28 is a diagram illustrating an uplink transmission beam according to Modification 3 of the embodiment of the present invention.
[Fig. 29] Fig. 29 is a diagram illustrating an example of a hardware configuration of the base station, the terminal, or the wireless relay device according to the embodiment of the present invention.
[Fig. 30] Fig. 30 is a diagram illustrating an example of a configuration of a vehicle according to the embodiment of the present invention.

### Description of Embodiments

Hereinafter, embodiments of the present invention will be described with reference to the drawings. Note that the embodiment described below is an example, and the embodiment to which the present invention is applied is not limited to the following embodiment.

In the operation of a wireless communication system of the embodiment of the present invention, existing technologies are appropriately used. Note that the existing technology is, for example, existing LTE, but is not limited to existing LTE. In addition, the term "LTE" used in the present specification has a broad meaning including LTE-Advanced or later systems (for example, NR) unless otherwise specified.

In the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in existing LTE are used. This is for convenience of description, and similar signals, functions, and the like may be referred to by other names. In addition, the above-described term in NR corresponds to NR-SS, NR-PSS, NR-SSS, NR-PBCH, NR-PRACH, and the like. However, even when a signal is used for NR, the signal is not necessarily specified as "NR-".

In the exemplary embodiment of the present invention, a duplex system may be a time division duplex (TDD) system, a frequency division duplex (FDD) system, or other (for example, flexible duplex or the like) systems.

In addition, in the embodiment of the present invention, "configuring" a radio parameter and the like may mean that a predetermined value is pre-configured, or that the radio parameter notified from a base station 10 or a terminal 20 is set.

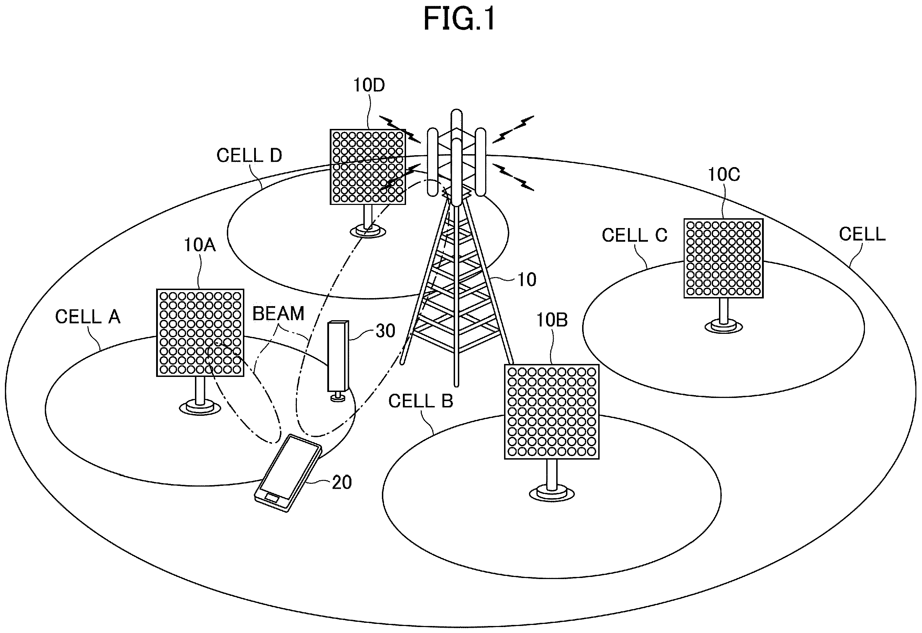

Fig. 1 is a diagram illustrating a wireless communication system according to an embodiment of the present invention. As illustrated in Fig. 1, the wireless communication system in the embodiment of the present invention includes a base station 10 and a terminal 20. A plurality of base stations 10 and a plurality of terminals 20 may be provided.

The base station 10 is a communication device that provides one or more cells and performs wireless communication with the terminal 20. The physical resources of the radio signal are defined in a time domain and a frequency domain, the time domain may be defined by the number of orthogonal frequency division multiplexing (OFDM) symbols, and the frequency domain may be defined by the number of subcarriers or the number of resource blocks. In addition, a transmission time interval (TTI) in the time domain may be a slot or a subslot, or the TTI may be a subframe.

The base station 10 can perform carrier aggregation of bundling a plurality of cells (a plurality of CCs (component carriers)) and performing communication with the terminal 20. In carrier aggregation, one primary cell (PCell) and one or more secondary cells (SCell) are used.

The base station 10 transmits a synchronization signal, system information, and the like to the terminal 20. The synchronization signal is, for example, NR-PSS and NR-SSS. The system information is transmitted through, for example, NR-PBCH or PDSCH, and is also referred to as broadcast information. As illustrated in Fig. 1, the base station 10 transmits a control signal or data to the terminal 20 through downlink (DL) and receives a control signal or data from the terminal 20 through uplink (UL). Note that, here, a signal transmitted on a control channel such as PUCCH or PDCCH is referred to as a control signal, and a signal transmitted on a shared channel such as PUSCH or PDSCH is referred to as data, but these naming conventions are merely examples.

The terminal 20 is a communication device having a wireless communication function such as a smartphone, a mobile phone, a tablet, a wearable terminal, or a machine-to-machine (M2M) communication module. As illustrated in Fig. 1, the terminal 20 uses various communication services provided by the wireless communication system by receiving a control signal or data from the base station 10 through DL and transmitting a control signal or data to the base station 10 through UL. Note that the terminal 20 may be referred to as UE, and the base station 10 may be referred to as gNB.

The terminal 20 can perform carrier aggregation for bundling a plurality of cells (a plurality of CCs) and performing communication with the base station 10. In carrier aggregation, one primary cell and one or more secondary cells are used. In addition, a PUCCH-SCell having PUCCH may be used.

In addition, in the wireless communication system according to the embodiment of the present invention, the base station 10 is a radio base station operated in 5G or 6G as an example, and forms a cell. Note that the cell is a cell having a relatively large size and is called a macro cell.

The base station 10A to the base station 10D are base stations operated in 5G or 6G. The base station 10A to the base station 10D respectively form a cell CA to a cell D having a size smaller than that of the macro cell. The cell A to the cell D may be referred to as a small cell, a macro cell, or the like. As illustrated in Fig. 1, the cell A to the cell D may be formed to be included in the macro cell.

A macro cell may be generally interpreted as a communicable area with a radius of several hundred meters to several tens of kilometers covered by one base station. In addition, the small cell may be interpreted as a generic name of a cell that has small transmission power and covers an area smaller than that of the macro cell.

Note that the base station 10 and the base station 10A to the base station 10D may be expressed as gNodeB (gNB), BS (base station), or the like. Furthermore, the terminal 20 may be described as UE, MS, or the like. Furthermore, the specific configuration of the wireless communication system including the number and types of base stations and terminals is not limited to the example illustrated in Fig. 1.

In addition, the wireless communication system is not necessarily limited to a wireless communication system according to 5G or 6G. For example, the wireless communication system may be a wireless communication system of the next generation of 6G or a wireless communication system according to LTE.

As an example, the base station 10 and the base station 10A to the base station 10D execute wireless communication with the terminal 20 according to 5G or 6G. The base station 10, the base station 10A to the base station 10D, and the terminal 20 may support massive MIMO that generates a beam with higher directivity by controlling radio signals transmitted from a plurality of antenna elements, carrier aggregation (CA) that uses a plurality of component carriers (CCs) in a bundle, dual connectivity (DC) that simultaneously communicates between the terminal 20 and each of two NG-RAN nodes, integrated access and backhaul (IAB) in which a radio backhaul between wireless communication nodes such as a gNB and radio access to the terminal 20 are integrated, and the like.

The wireless communication system may also support a high frequency band higher than the following frequency range (FR) defined in 3GPP Release 15. For example, FR1 may correspond to 410 MHz to 7.125 GHz, and FR2 may correspond to 24.25 GHz to 52.6 GHz. Further, the wireless communication system may support frequency bands above 52.6 GHz and up to 114.25 GHz. The frequency band may be referred to as a millimeter wave band.

Here, the base station 10 supporting massive MIMO can transmit beams. Massive MIMO generally means MIMO communication using an antenna having 100 or more antenna elements, and wireless communication with a higher speed than that of the related art can be performed due to a multiplexing effect of a plurality of streams or the like. In addition, advanced beamforming is also possible. The beam width can be dynamically changed according to a frequency band to be used, a state of the terminal 20, or the like. In addition, it is possible to increase reception signal power due to a beamforming gain by using a narrow beam. Furthermore, effects such as reduction of interference and effective use of radio resources are expected.

Furthermore, the wireless communication system may include a wireless relay device 30. In the embodiment of the present invention, as an example, the wireless relay device 30 may be a reflector (RIS), a metamaterial function device, a power saving device (batteryless device), a phase control reflector, a passive repeater, an intelligent reflective surface (IRS), a smart repeater, a network controlled repeater, or the like. As a specific example of the reflector (RIS), there may be what is called a metamaterial reflector, a dynamic meta-surface, a meta-surface lens, or the like (for example, Non-Patent Literature 2).

In the embodiment of the present invention, the wireless relay device 30 relays, for example, a radio signal transmitted from the base station 10A. In the description of the embodiments of the present invention, "relay" may refer to at least one of "reflection", "transmission", "aggregation (concentration of radio waves at substantially one point)", and "diffraction". The terminal 20 can receive the radio signal relayed by the wireless relay device 30. Further, the wireless relay device 30 may relay a radio signal transmitted from the terminal 20 or may relay a radio signal transmitted from the base station 10.

As an example, the wireless relay device 30 can change the phase of the radio signal to be relayed toward the terminal 20. From such a viewpoint, the wireless relay device 30 may be referred to as a phase variable reflector. In the present embodiment, the wireless relay device 30 may have a function of changing a phase of a radio signal and relaying the radio signal, but is not limited thereto. Furthermore, the wireless relay device 30 may be referred to as an RIS, repeater, a relay device, a reflect array, a transmitter array, or the like.

In addition, in the embodiments of the present invention, the wireless relay device 30 may be defined as having the functions described in the following 1) to 5).

1) A function of receiving a signal transmitted from the base station 10 may be included. The signal may be SS/PBCH block (SSB), PDCCH, PDSCH, a demodulation reference signal (DM-RS), a phase tracking reference signal (PT-RS), a channel status information reference signal (CSI-RS), a RIS dedicated signal, or the like, which is a DL signal. A function of receiving a signal carrying information related to the metamaterial function may be included. Note that a transmission function of transmitting the signal to the terminal 20 may be included.
2) A function of transmitting a signal to the base station 10 may be included. The signal may be PRACH, PUCCH, PUSCH, DM-RS, PT-RS, SRS, a RIS dedicated signal, or the like, which is a UL signal. A function of transmitting information related to the metamaterial function may be included. Note that a reception function of receiving the signal from the terminal 20 may be included.
3) A function of frame synchronization with the base station 10 may be included. Note that a function of frame synchronization with the terminal 20 may be included.
4) A function of reflecting a signal transmitted from the base station 10 or the terminal 20 may be included. For example, the reflection function may be a function related to phase change or a function related to beam control (for example, functions related to transmission configuration indication (TCI)-state and quasi co location (QCL) control, selection and application of beam, and selection and application of spatial filter/precoding weight).
5) A function of changing power of a signal transmitted from the base station 10 or the terminal 20 may be included. For example, the power change function may be power amplification.

In addition, "receive and transmit" and "relay" in the wireless relay device 30 such as the RIS or the smart repeater may mean that transmission is performed while the following function A is performed but the following function B is not performed.

Function A: apply phase shifter.

Function B: no compensation circuit (for example, amplification, filter) is involved.

As another example,
Function A: apply phase shifter and compensation circuit.
Function B: no frequency conversion is involved.

Note that, in the wireless relay device 30 such as the RIS, the amplitude may be amplified when the phase is changed. Furthermore, the "relay" in the wireless relay device 30 such as the RIS may mean that the received signal is transmitted as it is without performing the layer 2 or layer 3 level processing, the received signal at the physical layer level is transmitted as it is, or the received signal is transmitted as it is without interpreting the signal (then, phase change, amplitude amplification, or the like may be performed).

### (Device Configuration)

Next, functional configuration examples of the base station 10, the terminal 20, and the wireless relay device 30 that execute processes and operations in the embodiments of the present invention will be described. The base station 10, the terminal 20, and the wireless relay device 30 include a function of executing an embodiment described later. However, each of the base station 10, the terminal 20, and the wireless relay device 30 may include only any one of the functions of the embodiments.

### <Base Station 10>

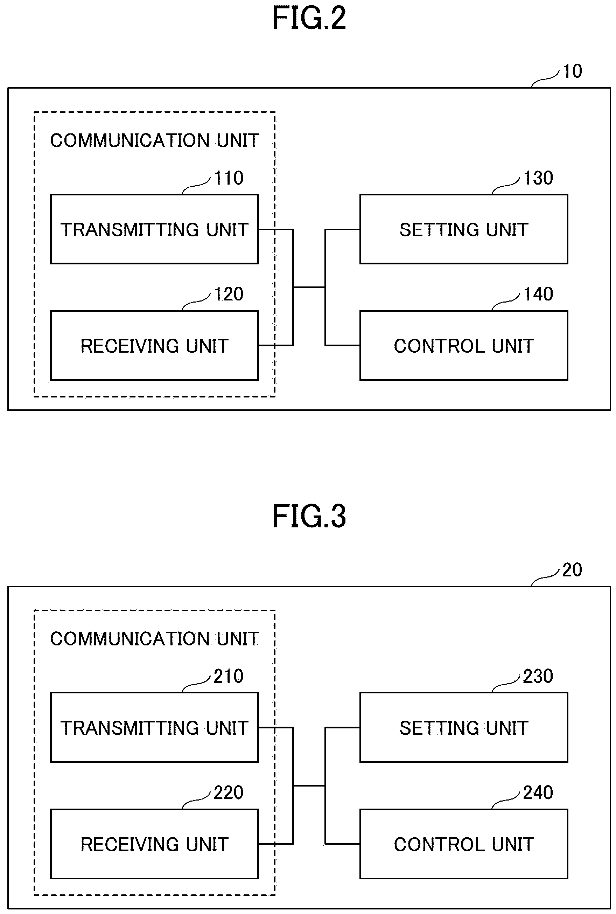

Fig. 2 is a diagram illustrating an example of a functional configuration of a base station according to the embodiment of the present invention. As illustrated in Fig. 2, the base station 10 includes a transmitting unit 110, a receiving unit 120, a setting unit 130, and a control unit 140. The functional configuration illustrated in Fig. 2 is merely an example. As long as the operation according to the embodiment of the present invention can be executed, the functional classification and the name of the functional unit may be anything. The transmitting unit 110 and the receiving unit 120 may be referred to as a communication unit.

The transmitting unit 110 has a function of generating a signal to be transmitted to the terminal 20 side and wirelessly transmitting the signal. The receiving unit 120 has a function of receiving various signals transmitted from the terminal 20 and acquiring, for example, information of an upper layer from the received signals. In addition, the transmitting unit 110 has a function of transmitting NR-PSS, NR-SSS, NR-PBCH, a DL/UL control signal, DL data, and the like to the terminal 20. Furthermore, the transmitting unit 110 transmits setting information and the like described in the embodiment.

The setting unit 130 stores setting information set in advance and various types of setting information to be transmitted to the terminal 20 in a storage device, and reads the setting information from the storage device as necessary. The control unit 140 performs, for example, resource allocation, control of the entire base station 10, and the like. Note that a functional unit related to signal transmission in the control unit 140 may be included in the transmitting unit 110, and a functional unit related to signal reception in the control unit 140 may be included in the receiving unit 120. Furthermore, the transmitting unit 110 and the receiving unit 120 may be referred to as a transmitter and a receiver, respectively.

### <Terminal 20>

Fig. 3 is a diagram illustrating an example of a functional configuration of a terminal according to the embodiment of the present invention. As illustrated in Fig. 3, the terminal 20 includes a transmitting unit 210, a receiving unit 220, a setting unit 230, and a control unit 240. The functional configuration illustrated in Fig. 3 is merely an example. As long as the operation according to the embodiment of the present invention can be executed, the functional classification and the name of the functional unit may be anything. The transmitting unit 210 and the receiving unit 220 may be referred to as a communication unit.

The transmitting unit 210 generates a transmission signal from transmission data and wirelessly transmits the transmission signal. The receiving unit 220 wirelessly receives various signals and acquires a signal of an upper layer from the received signal of the physical layer. Furthermore, the transmitting unit 210 transmits HARQ-ACK, and the receiving unit 220 receives setting information and the like described in the embodiment.

The setting unit 230 stores various types of setting information received from the base station 10 by the receiving unit 220 in the storage device, and reads the various types of setting information from the storage device as necessary. The setting unit 230 also stores setting information set in advance. The control unit 240 performs control of the entire terminal 20, and the like. Note that a functional unit related to signal transmission in the control unit 240 may be included in the transmitting unit 210, and a functional unit related to signal reception in the control unit 240 may be included in the receiving unit 220. Furthermore, the transmitting unit 210 and the receiving unit 220 may be referred to as a transmitter and a receiver, respectively.

### <Wireless Relay Device 30>

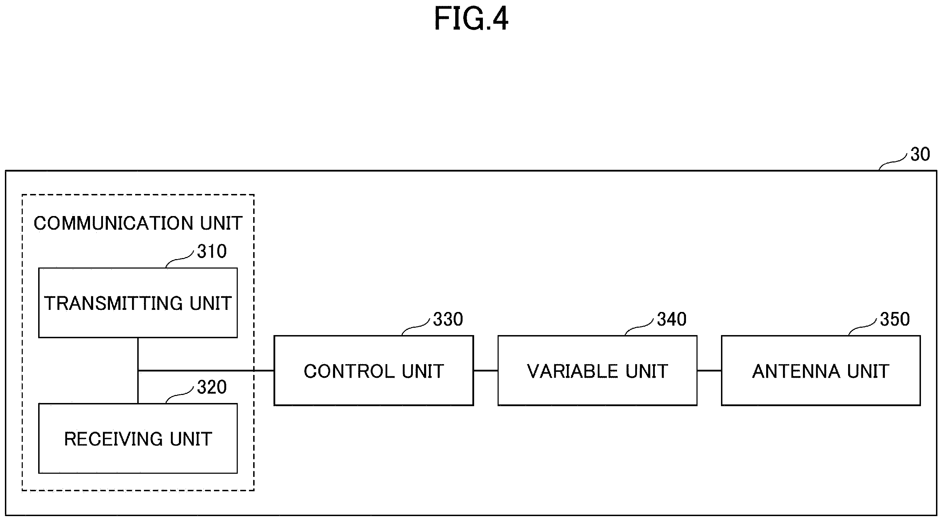

Fig. 4 is a diagram illustrating an example of a functional configuration of a wireless relay device according to the embodiment of the present invention. As illustrated in Fig. 4, the wireless relay device 30 includes a transmitting unit 310, a receiving unit 320, a control unit 330, a variable unit 340, and an antenna unit 350. As long as the operation according to the embodiment of the present invention can be executed, the functional classification and the name of the functional unit may be anything. The transmitting unit 310 and the receiving unit 320 may be referred to as a communication unit.

The antenna unit 350 includes at least one antenna connected to the variable unit 340. For example, the antenna unit 350 may be arranged as an array antenna. In the embodiment of the present invention, the antenna unit 350 may be particularly referred to as a relay antenna. Note that the variable unit 340 and the antenna unit 350 may be referred to as a relay unit.

The variable unit 340 is connected to the antenna unit 350, and can change a phase, a load, an amplitude, and the like. For example, the variable unit 340 may be a variable phase shifter, a phase shifter, an amplifier, or the like. For example, the direction, beam, or the like of the radio wave can be changed by changing the phase of the radio wave reaching the relay antenna from the radio wave generation source.

The control unit 330 is a control unit that controls the variable unit 340. In the embodiment of the present invention, the control unit 330 functions as a control unit that controls a relay state when a radio wave from the base station 10 or the terminal 20 is relayed without interpreting the signal. Here, the control unit 330 may change the relay state based on the control information received from the base station 10 or the terminal 20 via the communication unit, or may change the relay state based on the reception state of the radio wave from the base station 10 or the terminal 20. For example, the control unit 330 may select (the direction of) an appropriate reception beam and transmission beam based on control information such as SSB and control the variable unit 340. Similarly, the control unit 330 may select an appropriate combination of the reception direction and the transmission direction from the reception state based on a criterion such as the largest reception quality or the largest reception power and control the variable unit 340.

Furthermore, in the embodiment of the present invention, the control unit 330 can control the variable unit 340 based on, for example, information regarding a propagation path between the terminal 20 or the base station 10A and the antenna unit 350 (information estimated by the reception state and control information are included, and the same applies hereinafter). For example, the control unit 330 can relay a radio wave received from the base station 10A in a specific direction such as a radio wave receiving destination (here, the terminal 20) by changing the phase without using transmission power, using a known method such as an active repeater or RIS. Specifically, the control unit 330 controls the phase of the radio signal to relay toward the terminal 20 or the base station 10A based on estimated propagation path information H_{PT} and H_{RP}. That is, radio waves can be relayed in a specific direction by changing the phase of an array antenna or the like on the same principle as beamforming or the like. Note that the wireless relay device 30 may control (change) only the phase of the radio signal (radio wave) by the control unit 330, and relay the radio signal without power supply and without amplifying the power of the radio signal to be relayed or the like.

Furthermore, in the embodiment of the present invention, the control unit 330 may acquire information by a reception state. Furthermore, the receiving unit 320 may acquire control information from the base station 10A or the terminal 20. For example, the receiving unit 320 may receive various signals (including various signals exemplified in the above-described functions) such as the SSB transmitted from the base station 10A or the terminal 20 as the control information.

Furthermore, the control unit 330 may estimate propagation path information (H_{PT} and H_{RP}) between the radio wave generation source (for example, the base station 10A or the terminal 20) and the antenna unit 350 based on a reception state (for example, a change in reception power or the like) at the time of control of the variable unit 340.

Specifically, the propagation path information (propagation channel information) regarding each propagation path is information such as amplitude or phase, and is information estimated regarding the propagation path of the radio wave arriving at the antenna unit 350 in the embodiment of the present invention. As an example, the control unit 330 may estimate the propagation path information of the antenna unit 350 based on a change in reception power when the phase of the variable unit 340 of the antenna unit 350 having an array shape is orthogonally switched on a principle similar to that of in-phase/quadrature (I/Q) detection.

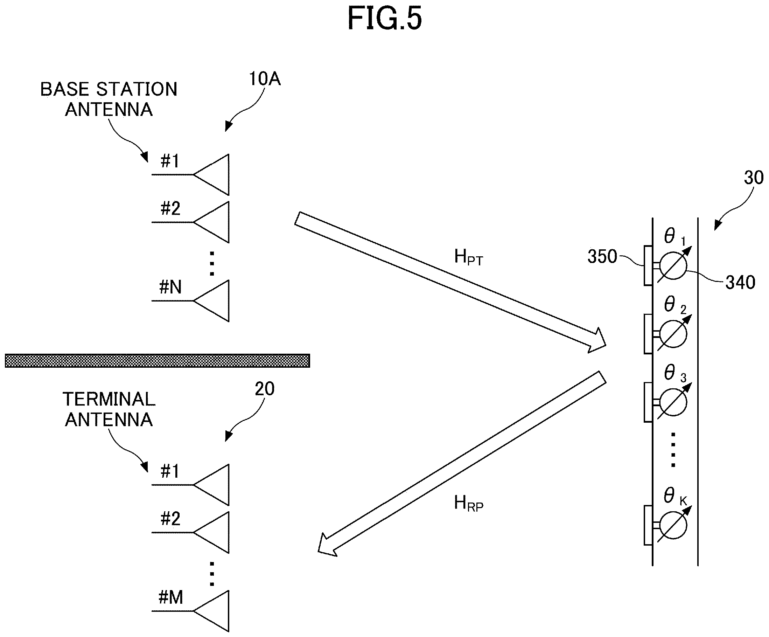

Fig. 5 is a diagram illustrating an example of an operation example of the wireless relay device according to the embodiment of the present invention. As illustrated in Fig. 5, as an example, the wireless relay device 30 is interposed between the base station 10A (or another base station 10 or the like) and the terminal 20, and relays (reflects, transmits, aggregates, diffracts, or the like) a radio signal transmitted and received between the base station 10A and the terminal 20.

As a specific example, when the radio quality is good, the base station 10A and the terminal 20 directly transmit and receive a radio signal without passing through the wireless relay device 30. On the other hand, when the radio quality deteriorates, for example, when there is a shielding object between the base station 10A and the terminal 20, the wireless relay device 30 relays a radio signal transmitted and received between the base station 10A and the terminal 20.

Specifically, the wireless relay device 30 estimates propagation path information H_{PT} and H_{RT} between a radio wave generation source such as the base station 10A or the terminal 20 and a relay antenna based on a change in reception power at the time of control of the variable unit 340 such as the variable phase shifter, and relays a radio signal toward a radio wave receiving destination such as the terminal 20 by controlling the variable unit 340 such as the variable phase shifter based on the estimated propagation path information. Note that the embodiment is not limited to estimating the propagation path information H_{PT} and H_{RT}, and the wireless relay device 30 may relay a radio signal to a radio wave receiving destination such as the base station 10A or the terminal 20 by controlling the variable unit 340 such as the variable phase shifter based on control information received from the base station 10A or the terminal 20.

Here, the propagation path or the propagation channel is an individual communication path of wireless communication, and here, is a communication path between transmission/reception antennas (a base station antenna, a terminal antenna, and the like in the drawing).

As an example, the wireless relay device 30 includes the antenna unit 350 having a small multi-element antenna compatible with massive MIMO, and the variable unit 340 having the variable phase shifter or the phase shifter that changes a radio wave, substantially a phase of a radio signal to a specific phase, and controls the phase of the radio wave relayed to the terminal 20 or the base station 10A using the variable unit 340.

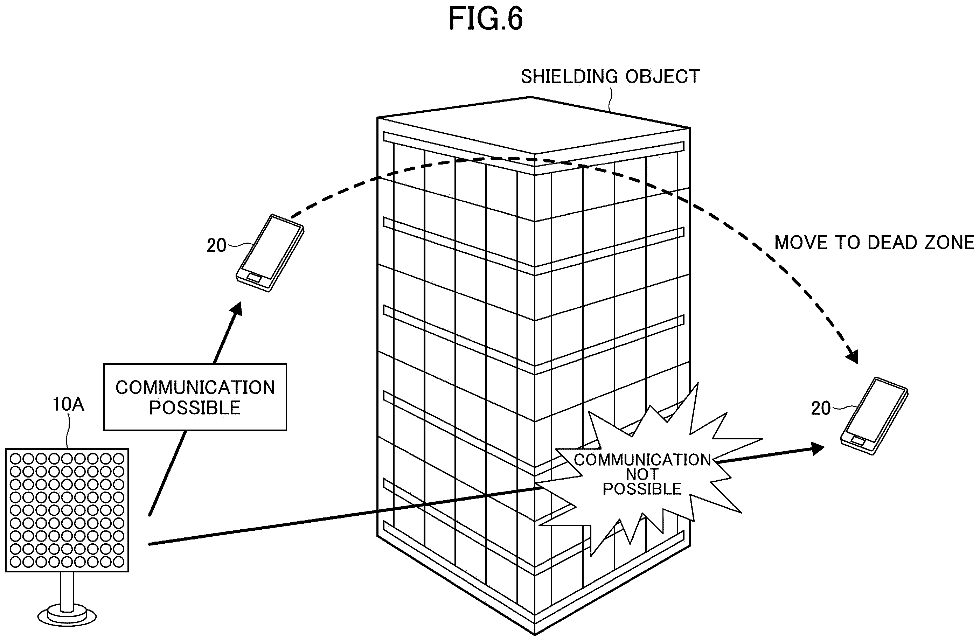

Fig. 6 is a diagram illustrating an example of communication in a high frequency band. As illustrated in Fig. 6, when a high-frequency band of several GHz to several tens of GHz or more is used, a dead zone is likely to occur due to strong rectilinearity of radio waves. When there is a clear line of sight between the base station 10A and the terminal 20, the wireless communication between the base station 10A and the terminal 20 is not affected even when the high frequency band is used. On the other hand, for example, when the line of sight between the base station 10A and the terminal 20 is shielded by a shielding object such as a building or a tree, the radio quality is greatly deteriorated. That is, when the terminal 20 moves to the dead zone shielded by the shielding object, communication may be interrupted.

Considering the presence of applications utilizing high-speed, high-capacity, and low-delay characteristics (remote operation or the like), it is important to eliminate a dead zone and secure connection between the base station and the terminal without interruption of communication in the wireless communication system.

Therefore, a technology capable of relaying a radio wave between the base station 10A and the terminal 20, such as a radio wave propagation control device such as a RIS or a smart repeater, has been developed. As described above, the communication characteristics can be improved by controlling the propagation characteristics of the base station signal, coverage can be expanded without a signal source, and installation and operation costs due to increase in the number of base stations can be reduced.

In the radio wave propagation control device in the related art, there are a passive type and an active type. The passive type has an advantage that control information is unnecessary, but cannot follow a moving body, an environmental change, or the like. On the other hand, although the active type has a disadvantage that the control information is required and the overhead increases, the active type can variably control the propagation characteristic of the radio wave by changing the load (phase) state of the control antenna, and can also follow the moving body, the environmental change, and the like.

There are two types of active radio wave propagation control devices and control methods: a feedback (FB) standard and a propagation path information standard. In the FB standard, the variable radio wave propagation control device causes the terminal 20 or the like to feed back a communication state when a load (phase) state is randomly changed, and searches for an optimum condition. On the other hand, in the propagation path information standard, the load state is determined based on the propagation path information between the base station and the radio wave propagation control device, and optimal radio wave propagation control can be performed. In the embodiments of the present invention, any type is applicable.

In addition, examples of the relay method include reflection, transmission, diffraction, aggregation, and the like, and in the present embodiment, as an example, configuration examples of a reflection type and a transmission type will be described below (see Non-Patent Literature 2 and the like for a diffraction type and an aggregation type).

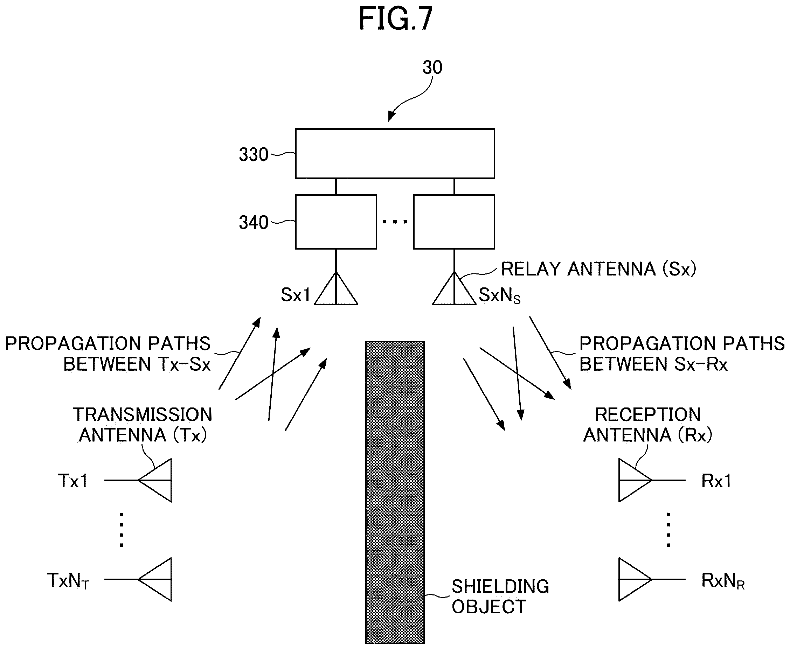

Fig. 7 is a diagram illustrating an example of a reflective wireless relay device according to the embodiment of the present invention. An example of a system configuration of the reflective wireless relay device 30 will be described with reference to Fig. 7. Fig. 7 is a diagram illustrating a relationship among a transmission antenna Tx of the base station 10A and the like, a relay antenna Sx of the transmissive wireless relay device 30, and a reception antenna Rx of the terminal 20 and the like. As illustrated in Fig. 7, in the embodiment of the present invention, MIMO is exemplified, a plurality of propagation paths between Tx and Sx and a plurality of propagation paths between Sx and Rx exist, and the wireless relay device 30 controls the variable unit 340 including a variable phase shifter or the like of the relay antenna Sx to relay radio waves.

As illustrated in Fig. 7, in the case of the reflection type, the relay antennas having an array shape are arranged to be oriented in the same direction. As a result, the propagation path of the relay antenna can be estimated based on the reception state observed when a plurality of phase conditions of the relay antenna are changed.

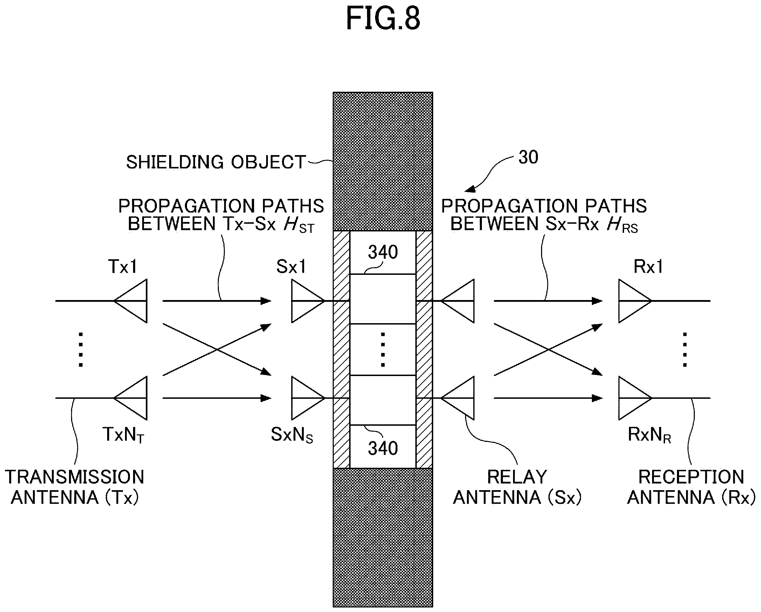

Fig. 8 is a diagram illustrating an example of a transmissive wireless relay device according to the embodiment of the present invention. An example of a system configuration of the transmissive wireless relay device 30 will be described with reference to Fig. 8. Fig. 8 is a diagram illustrating a relationship among the transmission antenna Tx of the base station 10A and the like, the relay antenna Sx of the transmissive wireless relay device 30, and the reception antenna Rx of the terminal 20 and the like. As illustrated in Fig. 8, in the embodiment of the present invention, MIMO is exemplified, a plurality of propagation paths between Tx and Sx and a plurality of propagation paths between Sx and Rx exist, and the wireless relay device 30 relays a radio wave arriving from one side to the other side via the variable unit 340 such as a variable phase shifter of the relay antenna Sx as illustrated. As described above, in the case of the transmission type, the reference antenna on the left side in the drawing and the relay antenna on the right side in the drawing are arranged to be directed in opposite directions as a pair so that the radio wave arriving from one side can be relayed to the other side. The reception state may be measured by a power detector or the like configured to be able to detect the power that reached the relay antenna regardless of the transmission type or the reflection type. Further, the propagation path of the relay antenna can be estimated based on the received signal observed when a plurality of phase conditions of the relay antenna are changed.

For example, in a future network such as 6G, even higher quality is required as compared with 5G. For example, ultra-high speed of tera-bps order, high reliability and low delay at an optical communication level, and the like are required. To achieve such quality, use of a very high frequency, for example, a terahertz wave is assumed. For example, when a very high frequency such as a terahertz wave is used, a high speed due to ultra-wide band use and a low delay due to a short symbol length are assumed as advantages, while disadvantages such as a narrow coverage due to a magnitude of an attenuation rate and a decrease in reliability due to high rectilinearity are also assumed. For each point where 6G communication is required, it is required to consider how to ensure redundancy, that is, how to increase transmission points of communication.

As described above, the wireless relay device 30 reflects or transmits a beam transmitted from the base station 10 or the terminal 20 in a predetermined direction, and delivers the beam to the terminal 20 or the base station 10. The wireless relay device 30 may be, for example, a passive RIS, an active RIS, or the like. The passive RIS is a device that does not change control of a reflection angle, a beam width, or the like according to a position of a mobile station, and control information is unnecessary, but precise beam control is difficult. The active RIS is a device that changes control of a reflection angle, a beam width, and the like according to a position of a mobile station, and precise beam control is possible, but overhead increases because control information is required. The wireless relay device 30 can increase a transmission point of communication.

The wireless relay device 30 may be any device having a predetermined function, and the predetermined function may be, for example, at least one of functions 1) and 2) described below.

### 1) UE function

The wireless relay device 30 may have a reception function of a signal transmitted from the base station 10 (for example, DL signal, SSB, PDCCH, PDSCH, DM-RS, PT-RS, CSI-RS, RIS dedicated signal). The wireless relay device 30 may receive the following 2) information related to the metamaterial function by the reception function.

In addition, the wireless relay device 30 may have a transmission function of a signal to the base station 10 (for example, UL signal, PRACH, PUCCH, PUSCH, DM-RS, PT-RS, SRS, RIS dedicated signal). The wireless relay device 30 may transmit the following 2) information related to the metamaterial function by the transmission function. In addition, the wireless relay device 30 may have a frame synchronization function with the base station 10.

### 2) Metamaterial function

The wireless relay device 30 may have a reflection function of a signal transmitted from the base station 10 or the terminal 20 (for example, phase change). The wireless relay device 30 may reflect a signal by changing a phase for each of a plurality of reflection elements included in the wireless relay device 30, or may reflect a signal by performing phase change common to the plurality of reflection elements.

Furthermore, the wireless relay device 30 may have a function related to beam control (for example, functions related to the control of the TCI-state and QCL, selection and application of beams, and selection and application of spatial filters/precoding weights). The wireless relay device 30 may have a power change function (for example, power amplification) of a signal transmitted from the base station 10 or the terminal 20. The wireless relay device 30 may perform different power changes for each reflective element included in the wireless relay device 30, or may perform common power changes for a plurality of reflective elements.

"Receive and transmit" in the wireless relay device 30 may mean to reflect radio waves/signals. Hereinafter, the terms "base station" and "terminal" are used, but are not limited thereto, and may be replaced with a communication device.

Note that the wireless relay device 30 according to the present embodiment may be assumed as follows.
·The BW operator installs the wireless relay device 30.
·The wireless relay device 30 is fixed and does not move.
·The wireless relay device 30 relays a signal transmitted from only one base station.
·The wireless relay device 30 can receive and transmit a control signal.
·The wireless relay device 30 operates in half-duplex.
·The wireless relay device 30 operates in a single-RIS environment.

### (Conventional Problem)

In NR Release 18, research on a network controlled wireless relay device has been conducted. Unlike the conventional amplifying and forwarding repeater, the network controlled wireless relay device can control beam/timing/DL-UL/ON-OFF/power.

Conventionally, there is a problem that a method for appropriately controlling a network controlled wireless relay device is not established for beamforming in such controls.

Specifically, beam information of wireless relay devices in the following four links/directions needs to be considered.

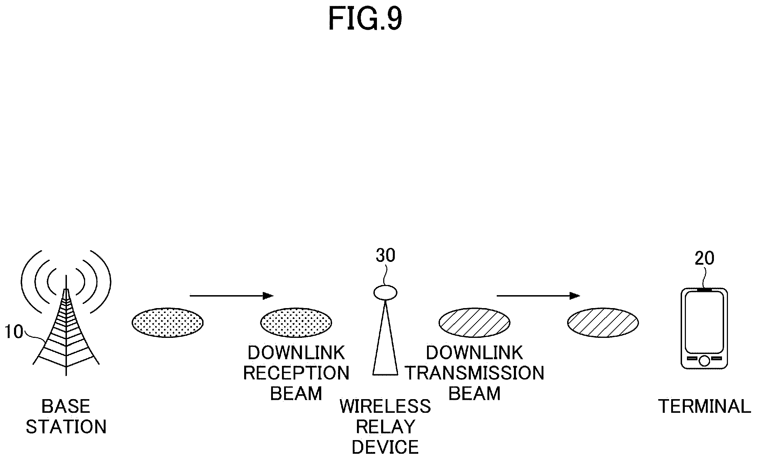

Fig. 9 is a diagram illustrating a downlink transmission beam and a downlink reception beam.

A beam in a first link/direction is a downlink transmission beam transmitted from the wireless relay device 30. The downlink transmission beam is a beam used to transfer/transmit DL signals to the terminal 20.

A beam in a second link/direction is a downlink reception beam received by the wireless relay device 30. The downlink reception beam is a beam used to receive DL signals from the base station 10. In addition to indicating the best downlink transmission beam, it is beneficial for the wireless relay device 30 to use the best downlink reception beam to receive signals from the base station 10.

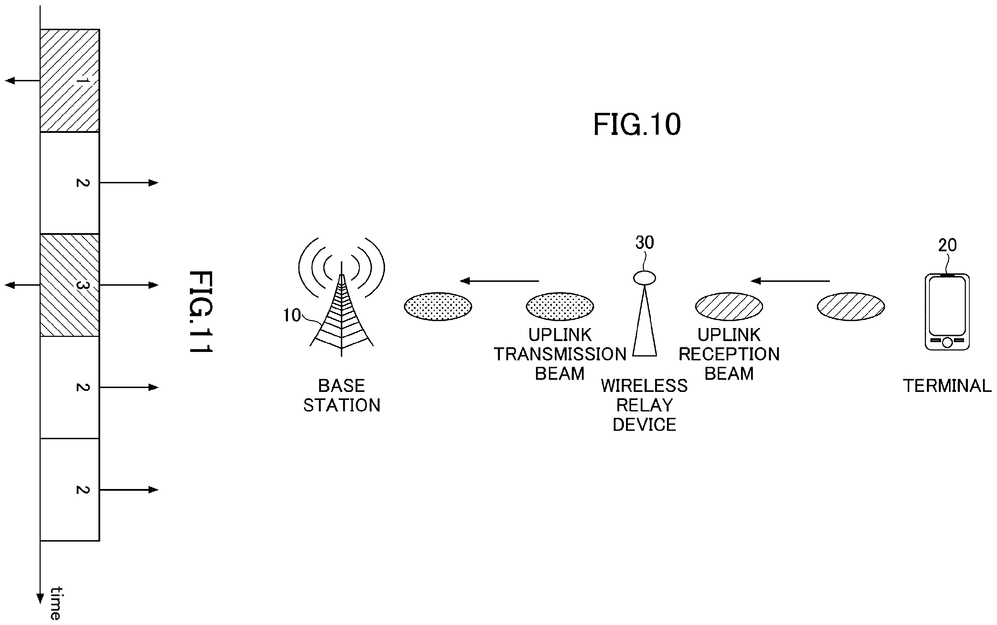

Fig. 10 is a diagram illustrating an uplink transmission beam and an uplink reception beam.

A beam in a third link/direction is an uplink transmission beam transmitted from the wireless relay device 30. The uplink transmission beam is a beam used to transfer/transmit UL signals to the base station 10.

A beam in a fourth link/direction is an uplink reception beam received by the wireless relay device 30. The uplink reception beam is a beam used to receive UL signals from the terminal 20. In addition to indicating the best uplink transmission beam, it is beneficial for the wireless relay device 30 to use the best uplink reception beam to receive signals from the terminal 20.

For the downlink reception beam received by the wireless relay device 30, the following three cases need to be considered.

Fig. 11 is a diagram illustrating three cases regarding the downlink reception beam received by the wireless relay device. Each case shown in time unit 1 to time unit 3 is as follows.

In a case of the time unit 1, the wireless relay device 30 needs to detect/decode a downlink channel (PDCCH/PDSCH) or a downlink reference signal (SSB/CSI-RS). Here, a conventional beam management framework can be reused.

In the case of the time unit 2, the wireless relay device 30 needs to amplify the DL signal and transfer the signal from the base station 10 to the terminal 20. Here, it is necessary to consider a method of indicating the downlink reception beam received by the wireless relay device 30.

In a case of the time unit 3, the wireless relay device 30 needs to detect/decode a downlink channel (PDCCH/PDSCH) or a downlink reference signal (SSB/CSI-RS), and needs to amplify the DL signal and transfer the signal from the base station 10 to the terminal 20. Here, it is necessary to consider whether to apply the beam indicated in the time unit 1 or the time unit 2.

That is, in the case of the time unit 1 or the time unit 3, the base station 10 schedules the downlink channel/reference signal received by the wireless relay device 30. The wireless relay device 30 decodes the transmitted downlink channel/reference signal. In addition, in the case of the time unit 2 or the time unit 3, the base station 10 schedules the downlink channel/reference signal received by the terminal 20. The wireless relay device 30 transfers the transmitted downlink channel/reference signal and does not decode the downlink channel/reference signal.

In addition, regarding the uplink transmission beam transmitted by the wireless relay device 30, the following three cases need to be considered.

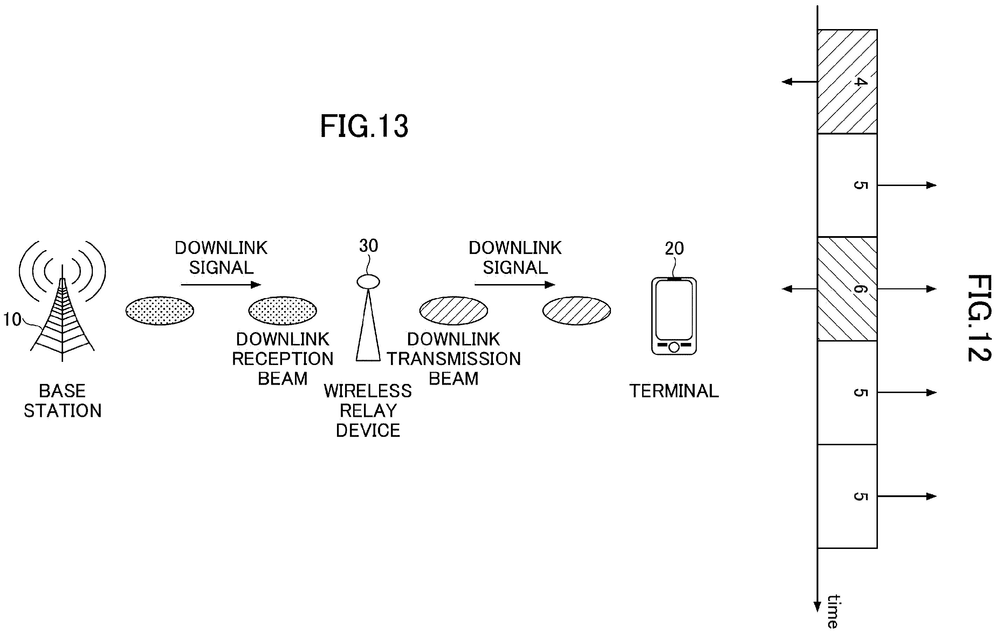

Fig. 12 is a diagram illustrating three cases regarding the uplink transmission beam transmitted by the wireless relay device. Each case shown in time unit 4 to time unit 6 is as follows.

In a case of the time unit 4, the wireless relay device 30 needs to transmit an uplink channel (PUCCH/PUSCH) or an uplink reference signal (SRS). Here, a conventional beam management framework can be reused.

In the case of the time unit 5, the wireless relay device 30 needs to amplify the UL signal and transfer the signal from the terminal 20 to the base station 10. Here, it is necessary to consider a method of indicating the uplink transmission beam transmitted by the wireless relay device 30.

In a case of the time unit 6, the wireless relay device 30 needs to transmit an uplink channel (PUCCH/PUSCH) or an uplink reference signal (SRS), and needs to amplify the UL signal and transfer the signal from the terminal 20 to the base station 10. Here, it is necessary to consider whether to apply the beam indicated in the time unit 4 or the time unit 5.

That is, in the case of the time unit 4 or the time unit 6, the base station 10 schedules the uplink channel/reference signal transmitted by the wireless relay device 30. The wireless relay device 30 generates and transmits a scheduled uplink channel/reference signal. In addition, in the case of the time unit 5 or the time unit 6, the base station 10 schedules the uplink channel/reference signal transmitted by the terminal 20. The wireless relay device 30 transfers the scheduled uplink channel/reference signal, but the wireless relay device 30 itself does not generate the uplink channel/reference signal.

Fig. 13 is a first view for explaining terms according to the embodiment of the present invention.

A downlink transmission beam ("repeater DL Tx beam") of the wireless relay device 30 means a beam used by the wireless relay device 30 to transfer/transmit downlink signals to the terminal 20.

A downlink reception beam ("repeater DL Rx beam") of the wireless relay device 30 means a beam used by the wireless relay device 30 to receive downlink signals from the base station 10.

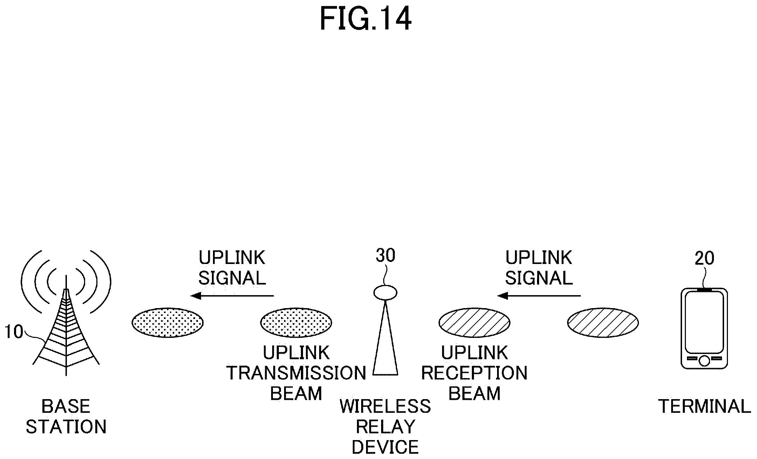

Fig. 14 is a second view for explaining terms according to the embodiment of the present invention.

An uplink transmission beam ("repeater UL Tx beam") of the wireless relay device 30 means a beam used by the wireless relay device 30 to transfer/transmit uplink signals to the base station 10.

An uplink reception beam ("repeater UL Rx beam") of the wireless relay device 30 means a beam used by the wireless relay device 30 to receive uplink signals from the terminal 20.

### (Summary of Present Embodiment)

In the present embodiment, a method of beam control of an uplink transmission beam transmitted by the wireless relay device 30 will be described. Hereinafter, Examples 1 to 5 will be described as specific examples.

### (Example 1)

In the present example, an example in which an uplink transmission beam transmitted by the wireless relay device 30 is controlled by a network will be described.

In the present example and the following description, it is assumed that a time unit includes a subframe/slot/symbol/plurality of subframes/plurality of slots/plurality of symbols.

The wireless relay device 30 may assume that the uplink transmission beam to be received is controlled by a network (for example, the base station 10).

The wireless relay device 30 may assume that, in the case of uplink reception, when an uplink channel (PUCCH/PUSCH) or an uplink reference signal (SRS) needs to be transmitted, a mechanism of NR Release 17 for uplink beam indication of the PUCCH/PUSCH/SRS is reused.

In the case of the uplink reception, when it is necessary to amplify and transfer the UL signal transmitted from the terminal 20, the wireless relay device 30 may assume that the uplink reception beam is indicated for each time unit by side control information (RRC, MAC-CE or DCI).

The wireless relay device 30 may determine the uplink reception beam based on the uplink reception beam by the indicated base station 10.

Note that there is no such beam indication as the conventional transmitter does not need to assume a transmission beam to transmit a time unit/signal when there is no scheduled data/RS.

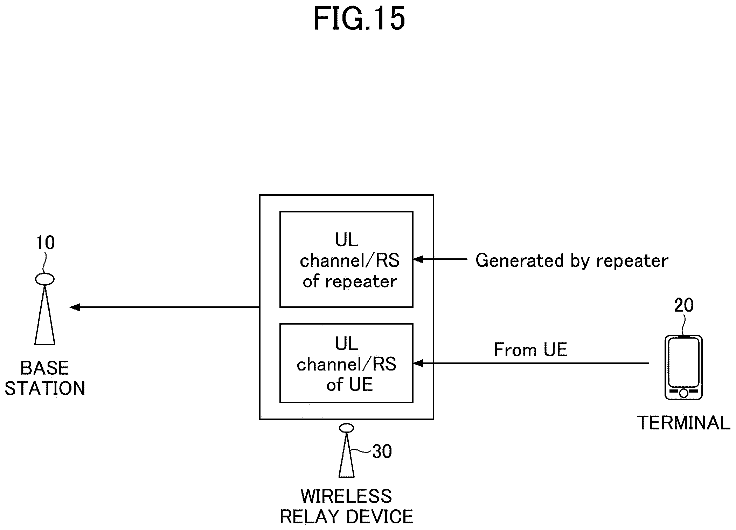

Fig. 15 is a diagram illustrating the operation of the wireless relay device according to Example 1 of the embodiment of the present invention. For uplink transmission, in a certain time unit, the wireless relay device 30 needs to perform both an operation of transmitting an uplink channel/reference signal (operation A: first operation) and an operation of transferring a UL signal transmitted from the terminal 20 (operation B: second operation). Here, the wireless relay device 30 may perform any of the following operations.

### <Proposal 1>

The wireless relay device 30 may assume that only one uplink transmission beam is indicated for a time unit. The wireless relay device 30 may use the indicated beam for both the operation A and the operation B.

### <Proposal 2>

The wireless relay device 30 may assume that two uplink transmission beams are separately indicated. One beam is an indication related to the operation A, and the other beam is an indication related to the operation B. Here, the wireless relay device 30 may perform any of the operations according to the following proposals.

### <Proposal 2-1>

The wireless relay device 30 may assume that the indicated two uplink transmission beams are the same. For example, the wireless relay device 30 may assume that the same beam ID is indicated, two beams use the same spatial domain filter, two beams are QCL on the same reference resource, or the like.

For example, the wireless relay device 30 may use an integrated TCI framework and apply the indicated integrated TCI to both the operation A and the operation B.

In addition, the wireless relay device 30 may apply the indicated beam only to the operation A assuming that the uplink transmission beam according to the operation B is not indicated.

### <Proposal 2-2>

The wireless relay device 30 may use the uplink transmission beams shown in the operation A in the same time unit assuming that the indicated two uplink transmission beams may be different.

### <Proposal 2-3>

The wireless relay device 30 may use the uplink transmission beams shown in the operation B in the same time unit assuming that the indicated two uplink transmission beams may be different.

According to the present example, the uplink transmission beam transmitted by the wireless relay device 30 can be appropriately controlled by the network (for example, the base station 10).

### (Example 2)

In the present example, a method for measuring an uplink transmission beam is described.

The wireless communication system may perform any of the following optional operations to measure the quality of the uplink transmission beam in the case of uplink transmission beam control.

### <Option 1>

The wireless relay device 30 may transmit the same SRS as the conventional terminal 20, and the base station 10 may measure the SRS. The wireless relay device 30 may assume that the conventional SRS setting and transmission procedure are reused.

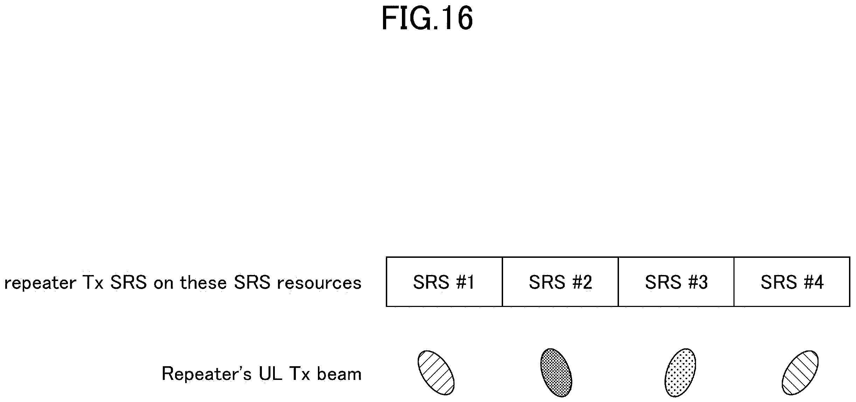

Fig. 16 is a diagram illustrating an uplink transmission beam according to Option 1 of Example 1 of the embodiment of the present invention. Only a part of the use of the SRS may be set for the wireless relay device 30, for example, at least one of {beam management, codebook, non-codebook, antenna switching}.

Only some resource types of the SRS may be set for the wireless relay device 30, for example, at least one of {periodic, semi-persistent, non-periodic}.

Only some candidate values of the SRS port may be set for the wireless relay device 30, for example, at least one of {1, 2, 4}. For example, the wireless relay device 30 may assume that only one port SRS can be set.

What can be set for the wireless relay device 30 may be a candidate value of an SRS period different from that of the conventional terminal 20, for example, a subset of a candidate value of the conventional terminal 20, or a period larger than that of the conventional terminal 20.

What can be set for the wireless relay device 30 may be a maximum number of SRS resource sets, SRS resources, SRS resources for each set, or an aperiodic SRS trigger state different from that of the conventional terminal 20. For example, the number may be smaller than that of the conventional terminal 20.

For example, a value of the conventional terminal 20 is as follows. That is, "maxNrofSRS-ResourceSets" is 16, "maxNrofSRS-ResourceSets-1" is 15, "maxNrofSRS-Resources" is 64, "maxNrofSRS-Resources-1" is 63, "maxNrofSRS-ResourcesPerSet" is 16, "maxNrofSRS-TriggerStates-1" is 3, and "maxNrofSRS-TriggerStates-2" is 2.

### <Option 2>

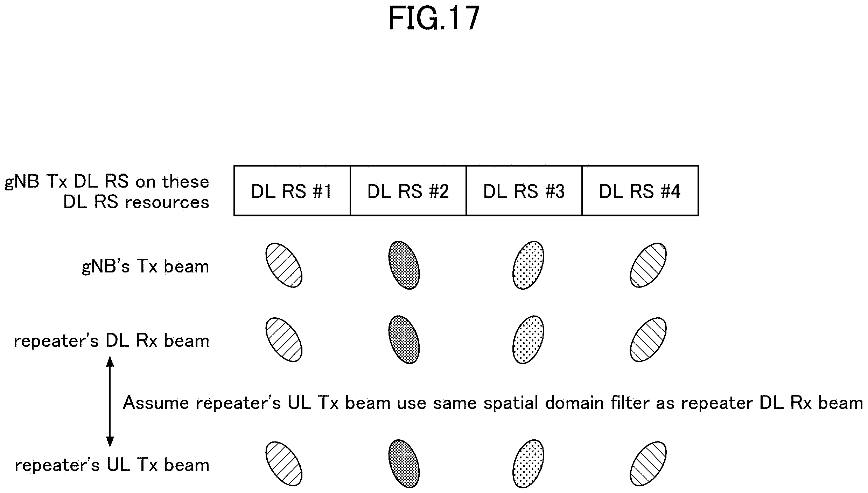

Fig. 17 is a diagram illustrating an uplink transmission beam according to Option 2 of Example 1 of the embodiment of the present invention. In view of the reciprocity of DL/UL channels, the wireless relay device 30 may assume that downlink reception beam quality is used to represent uplink transmission beam quality. That is, the base station 10 may transmit a downlink reference signal (SSB/CSI-RS), and the wireless relay device 30 may measure the downlink reference signal.

The wireless relay device 30 may assume reuse of conventional CSI-RS setting/measurement/reporting procedures.

### <Option 3>

The wireless relay device 30 may amplify and transfer the SRS from the terminal 20 to the base station 10. That is, the wireless relay device 30 itself may not transmit the SRS.

The terminal 20 transmits the SRS by using a conventional procedure. The base station 10 measures the SRS resource transmitted from the terminal 20.

According to Option 3, the network (for example, the base station 10) does not need to set the SRS resource for the wireless relay device 30. Accordingly, SRS resources are saved.

For an uplink transmission beam transmitted from the wireless relay device 30 to transfer the SRS from the terminal 20 to the base station 10, any of the following options may be used.

### <Option 3-1>

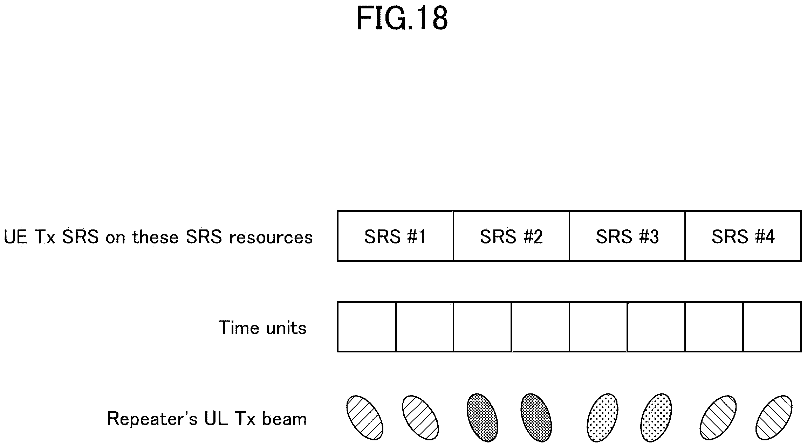

Fig. 18 is a diagram illustrating an uplink transmission beam according to Option 3-1 of Example 1 of the embodiment of the present invention. The wireless relay device 30 may assume that the uplink transmission beam is indicated for each time unit via side control information (DCI/MAC-CE/RRC). A specific example will be described in Example 3 described later.

### <Option 3-2>

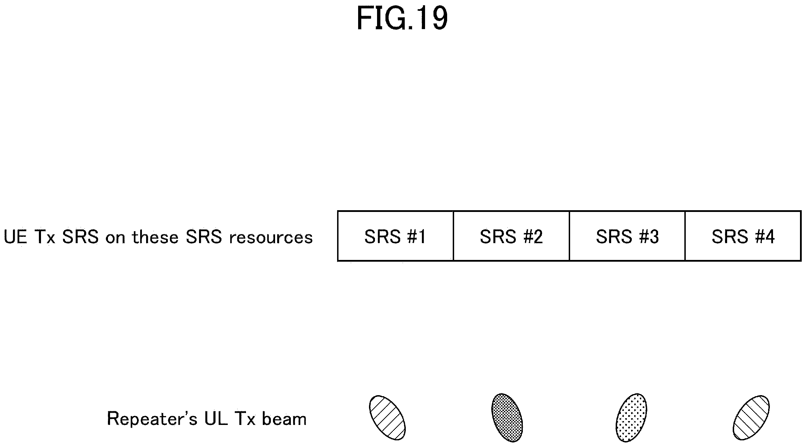

Fig. 19 is a diagram illustrating an uplink transmission beam according to Option 3-2 of Example 1 of the embodiment of the present invention. The base station 10 may indicate the SRS resource setting of the terminal 20 for the uplink transmission beam through side control information (DCI/MAC-CE/RRC). Further, the base station 10 may indicate the uplink transmission beam related to the time domain resource for each SRS resource of the terminal 20 via side control information (DCI/MAC-CE/RRC).

The wireless relay device 30 may assume that only information of the time domain resource of the SRS resource of the terminal 20 is indicated. That is, the indicated information may be a periodic/semi-persistent/aperiodic resource type, period, occupied slot, occupied OFDM symbol in a slot, or the like.

Note that Option 3-2 may be a special method of Option 3-1. That is, Option 3-2 can be interpreted as a special method by which the uplink transmission beam to be transmitted is indicated to the wireless relay device 30 of each time unit grouped as the time domain resource of the SRS resource of the terminal 20.

### <Option 3-3>

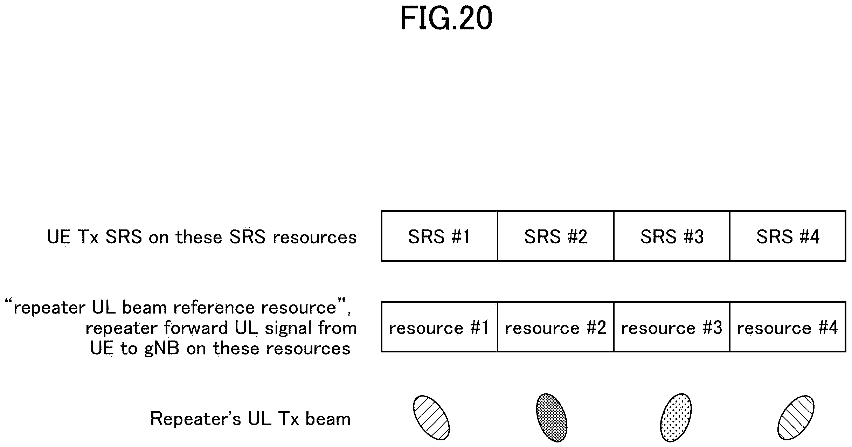

Fig. 20 is a diagram illustrating an uplink transmission beam according to Option 3-3 of Example 1 of the embodiment of the present invention.

The wireless relay device 30 may assume that a new type of resource of the wireless relay device 30 are defined. For example, "repeater UL beam reference resource" may be named. Each "repeater UL beam reference resource" is a set of time domain resources (for example, several adjacent symbols).

In each "repeater UL beam reference resource", the wireless relay device 30 may amplify and transfer the UL signal from the terminal 20 to the base station 10. The wireless relay device 30 may assume that the uplink transmission beam to be transmitted is indicated for each "repeater UL beam reference resource" via side control information (DCI/MAC-CE/RRC). Details of the configuration of the "repeater UL beam reference resource" will be illustrated in Example 4 described later.

Note that Option 3-3 may be a special method of Option 3-1. That is, Option 3-3 can be interpreted as a special method of indicating the uplink transmission beam for each time unit that is grouped as the "repeater UL beam reference resource" for which a set of time units is newly defined.

Further, by implementation, since the base station 10 can set the "repeater UL beam reference resource" in the same time domain resource as the SRS resource of the terminal 20, the base station 10 can measure the SRS transmitted from the terminal 20 and transferred by the wireless relay device 30.

According to the present example, uplink transmission beam measurement can be appropriately performed.

### (Example 3)

In the present example, a method of setting an uplink transmission beam transmitted by the wireless relay device 30 will be described.

The wireless relay device 30 may assume at least one of the following options as a method of setting the uplink transmission beam of each time unit.

### <Option 1>

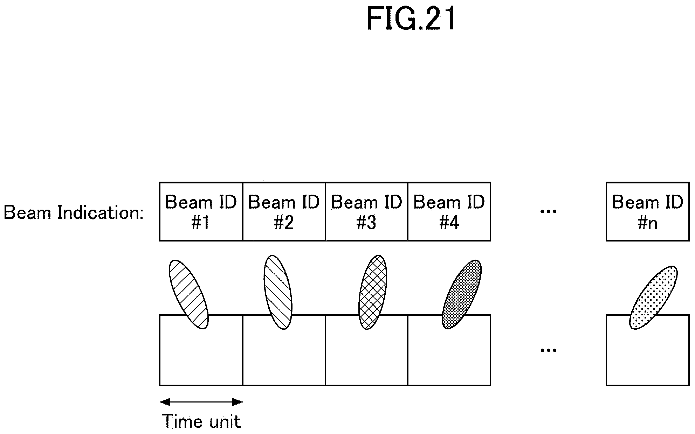

Fig. 21 is a diagram illustrating an uplink transmission beam according to Option 1 of Example 2 of the embodiment of the present invention.

The wireless relay device 30 may assume that a sequence of uplink transmission beam IDs is specified and applied to a sequence of time units. Each beam ID is applied to each time unit.

The wireless relay device 30 may assume that a sequence of time units is indicated as the number of consecutive time units by indicating a start time unit and a length of the time unit.

Note that the start time or the length of time can be predefined. For example, it may be assumed that the wireless relay device 30 starts from an offset predefined by receiving the beam indication or a length of a predefined time unit. In addition, the wireless relay device 30 may assume that a sequence of time units is indicated as a sequence of time unit IDs.

<Option 2>

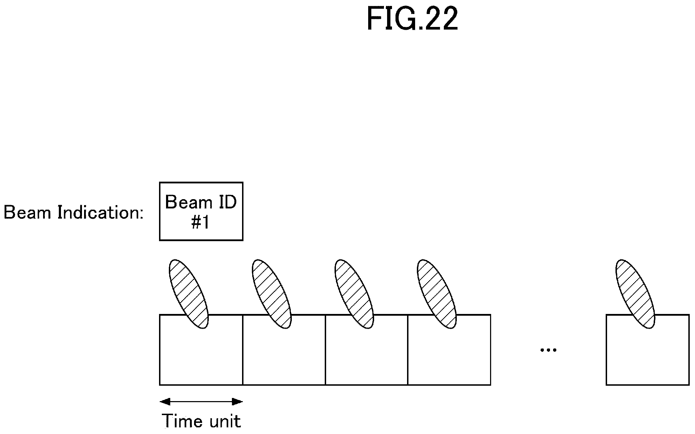

Fig. 22 is a diagram illustrating an uplink transmission beam according to Option 2 of Example 2 of the embodiment of the present invention.

The wireless relay device 30 may assume that one uplink transmission beam ID is specified and applied to a series of time units. The wireless relay device 30 may assume that a sequence of time units is indicated as the number of consecutive time units by showing a start time unit and a length of the time unit.

Note that the start time or the length of time may be predefined. For example, it may be assumed that the wireless relay device 30 starts from an offset predefined by receiving the beam indication or a length of a predefined time unit, or is applied until a new beam indication. In addition, the wireless relay device 30 may assume that a sequence of the time unit is indicated as a sequence of time unit IDs.

### <Option 3>

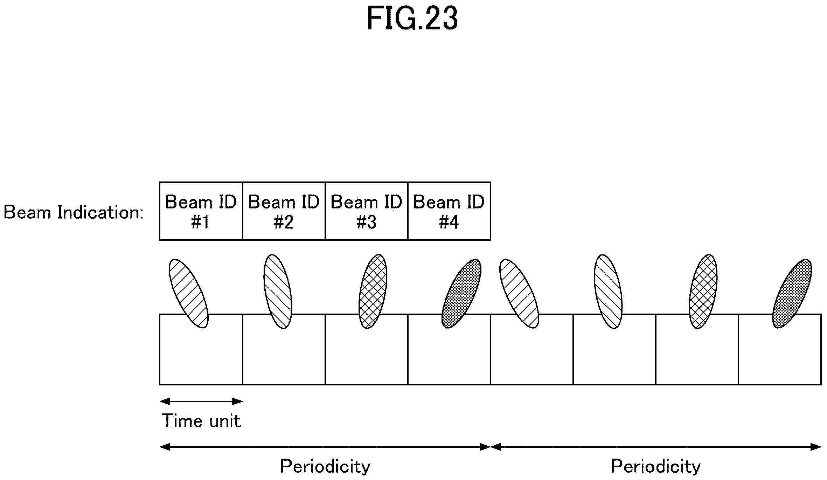

Fig. 23 is a diagram illustrating an uplink transmission beam according to Option 3 of Example 2 of the embodiment of the present invention.

The wireless relay device 30 may assume that a periodic pattern is indicated. The wireless relay device 30 may assume that a period and an offset are indicated. In addition, the wireless relay device 30 may assume that a sequence of uplink transmission beam IDs is indicated by each beam ID applied to each periodic time unit.

### <Option 4>

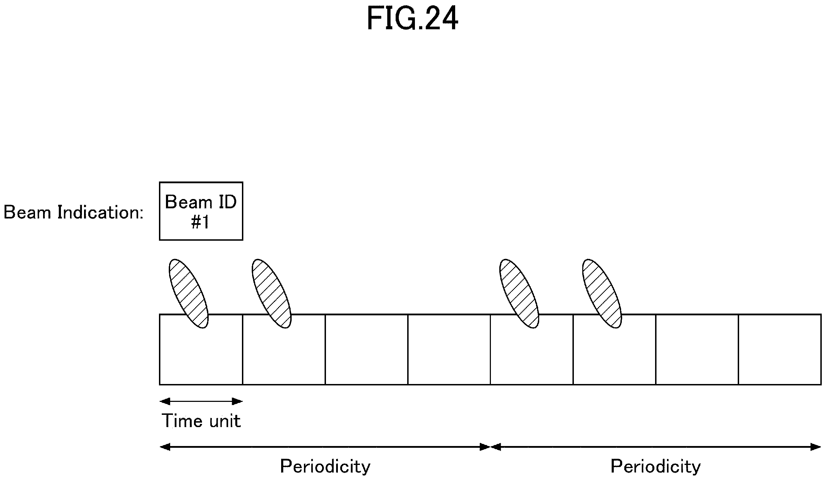

Fig. 24 is a first diagram illustrating an uplink transmission beam according to Option 4 of Example 2 of the embodiment of the present invention.

The wireless relay device 30 may assume that a periodic pattern is indicated. The wireless relay device 30 may assume that a period and an offset are indicated. In addition, the wireless relay device 30 may assume that one uplink transmission beam ID is indicated and applied to a periodic series of time units.

The wireless relay device 30 may assume that a sequence of time units is indicated as the number of consecutive time units by being shown as a start time unit and a length of the time unit.

In addition, the wireless relay device 30 may assume that a start time or a length of time is predefined. For example, the wireless relay device 30 may start applying the uplink transmission beam from an offset predefined by receiving the beam indication or a length of a predefined time unit. In addition, the wireless relay device 30 may assume that a sequence of time units is shown as a sequence of time unit IDs.

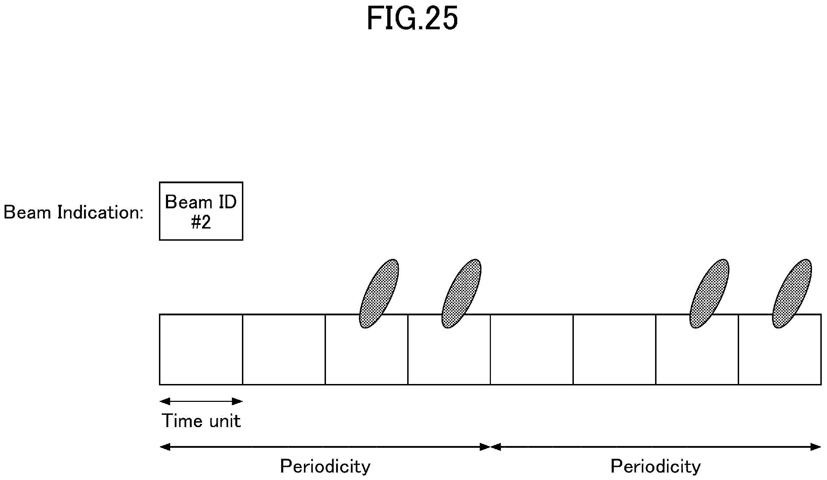

Fig. 25 is a second diagram illustrating an uplink transmission beam according to Option 4 of Example 2 of the embodiment of the present invention. In the case of a time unit in which the beam is not indicated as illustrated in Fig. 24, the wireless relay device 30 may assume that the beam may be indicated as illustrated in Fig. 25, for example, separately from the beam indication illustrated in Fig. 24.

### <Option 5>

The wireless relay device 30 may assume that a PUSCH scheduling DCI is reused (DCI format 0_X) . An SRI field or a new field in the PUSCH scheduling DCI (DCI format 0_X) may be a field indicating the uplink transmission beam ID.

The wireless relay device 30 may assume that the indicated uplink transmission beam ID and corresponding uplink transmission beam are applied to the slot/symbol indicated in the allocation field of the time domain resource of the PUSCH scheduling DCI (DCI format 0_X).

In addition, considering that there is a case where it is not necessary to transmit PUSCH, the wireless relay device 30 only needs to amplify and transfer the UL signal transmitted from the base station 10, and when receiving the PUSCH scheduling DCI (DCI format 0_X), the base station 10 may indicate that the wireless relay device 30 transfers only the UL signal from the terminal 20. It may be assumed that the base station 10 and the wireless relay device 30 do not transmit the PUSCH in the resource indicated by the DCI in the following method.

If one or a plurality of conventional fields (or new fields) of the DCI are set to a predefined value, in the slot/symbol indicated in the DCI, the wireless relay device 30 may transfer only the UL signal from the terminal 20 to the base station 10. That is, the wireless relay device 30 may not transmit the PUSCH in the resource indicated by the DCI.

When the DCI is detected by a specific RNTI/SS set/CORESET, the wireless relay device 30 may transfer only the UL signal from the terminal 20 to the base station 10 in the slot/symbol indicated by the DCI, and may not transmit the PUSCH in the resource indicated by the DCI to the wireless relay device 30.

Note that a new DCI format may be introduced. The new DCI format includes, for example, a field similar to the SRI field of the PUSCH scheduling DCI (DCIO_X) showing the uplink transmission beam ID.

The new DCI format includes, for example, a field similar to the time domain allocation field of the PUSCH scheduling DCI (DCI0_X). The applicable time (slot offset, symbol position in slot) for the designated uplink transmission beam ID is shown.

### <Option 6>

The wireless relay device 30 may assume that confitured grant (CG) setting/activation is reused.

The SRI field, a new field of CG setting (RRC), or CG activation DCI shows the uplink transmission beam ID. The wireless relay device 30 may assume that the indicated uplink transmission beam ID and the corresponding uplink transmission beam are applied to the slot/symbol indicated by the CG setting (RRC) and CG activation DCI.

Furthermore, considering a case where the wireless relay device 30 does not need to transmit the PUSCH, the wireless relay device 30 only needs to amplify and transfer the UL signal from the terminal 20 to the base station 10 in the case of one or a plurality of conventional fields (or new fields) when receiving the CG setting/activation. When the CG setting or the CG activation DCI is set to a predefined value, in the slot/symbol configured by the CG setting (RRC) and the CG activation DCI, the wireless relay device 30 may transfer only the UL signal from the terminal 20 to the base station 10, and may not transmit the PUSCH on the same resource.

In addition, the wireless relay device 30 may assume that new RRC setting and activation DCI similar to the CG setting/activation are introduced. The new RRC setting or DCI may include a field showing the uplink transmission beam ID.

The new RRC setting or DCI may include a field showing the applicable time (period, slot offset, symbol position in the slot) for the specified uplink transmission beam ID.

### <Option 7>

The wireless relay device 30 may assume that the integrated TCI state indication DCI of NR Release 17 is reused. A TCI state field or a new field DCI of the integrated TCI state indication of NR Release 17 may show the uplink transmission beam ID.

The wireless relay device 30 may assume that the indicated uplink transmission beam ID and the corresponding uplink transmission beam are applied starting from the first symbol/slot that is at least X slot/symbol after the last slot/symbol of the PUCCH transferring HARQ-ACK of the DCI.

In addition, the wireless relay device 30 may start application from the first symbol/slot that is at least X slot/symbol after the slot/symbol that received the DCI.

X may be pre-defined/set/indicated by capability information. In addition, the wireless relay device 30 may assume that a new DCI format is introduced. The new DCI format may include, for example, a field similar to the TCI state field of integrated TCI state indication DCI of Release 17 showing the uplink transmission beam ID. Here, the application time of the beam indication may be the same as described above.

When reusing the integrated TCI framework for uplink transmission beam control, the wireless relay device 30 may assume that the integrated TCI framework is extended as integrated uplink TCI in addition to the corresponding UL channel/reference signal of the integrated uplink TCI. The wireless relay device 30 may be assumed to be applied to uplink transmission when it is necessary to transfer the UL signal from the terminal 20 to the base station 10.

It may be assumed that the condition for application of the "indicated TCI state" is specified as "when the wireless relay device 30 transfers the UL signal from the terminal 20 to the base station 10, the integrated downlink TCI state indicated for uplink transmission is applied".

### <Option 8>

When the time unit only needs to transfer the uplink signal from the terminal 20 to the base station 10, the wireless relay device 30 does not need to transmit the UL channel/reference signal by itself (scheduling of the UL channel/reference signal is unnecessary for the wireless relay device 30). The wireless relay device 30 may assume that the uplink transmission beam is the latest TCI state/spatial relationship for a particular uplink reference signal/channel of the wireless relay device 30 when there is no indication for the transmission beam to be transmitted by the wireless relay device 30.

The latest TCI state/spatial relationship shown for a particular uplink reference signal/channel may be, for example, the latest TCI state/spatial relationship of PUSCH/PUCCH/SRS or the latest TCI state/spatial relationship of the PUCCH resource #0. In addition, the wireless relay device 30 may assume that the rule of NR Release 15/16/17 for determining the default beam of PUSCH/PUCCH/SRS is reused.

In addition, in a case of a time unit in which the wireless relay device 30 itself needs to transmit the UL channel/reference signal, and when there is no indication about the transmission beam transmitted by the wireless relay device 30, it may be assumed that the uplink transmission beam is the latest TCI state/spatial relationship of the particular uplink reference signal/channel of the wireless relay device 30.

The latest TCI state/spatial relationship shown for a particular uplink reference signal/channel may be, for example, the latest TCI state/spatial relationship of PUSCH/PUCCH/SRS or the latest TCI state/spatial relationship of the PUCCH resource #0. In addition, the wireless relay device 30 may assume that the rule of NR Release 15/16/17 for determining the default beam of PUSCH/PUCCH/SRS is reused.

When there is no indication about the uplink transmission beam transmitted by the wireless relay device 30, the uplink transmission beam transmitted by the wireless relay device 30 when the UL signal is transferred from the terminal 20 to the base station 10 may be dependent on implementation, and/or the uplink transmission beam transmitted by the wireless relay device 30 when the uplink channel/reference signal is transmitted by itself may be dependent on implementation.

The plurality of options described above may be supported. The wireless relay device 30 may assume that which one or more options are applied is set. The wireless relay device 30 may assume that one or more supported options are reported as capability information of the wireless relay device 30. Each option may be assumed to be defined as a mandatory or optional function.

In the options, a plurality of uplink transmission beam IDs may be shown in a time unit. In addition, in the options, a plurality of uplink transmission beam IDs may be shown for a plurality of frequency domain resource units in a time unit.

According to the present example, it is possible to appropriately set the uplink transmission beam transmitted by the wireless relay device 30.

### (Example 4)

In the present example, an example in which a resource serving as a reference of a transmission beam of the wireless relay device 30 is defined will be described.

The "repeater UL beam reference resource" may be a newly defined type of resource used for beam management of the wireless relay device 30. Each "repeater UL beam reference resource" is a set of time domain resources. In each "repeater UL beam reference resource", the wireless relay device 30 may amplify and transfer the UL signal from the terminal 20 to the base station 10. Each "repeater UL beam reference resource" may occupy a plurality of adjacent symbols.

The supported candidate numbers of adjacent symbols may be predefined, for example, selected from {1, 2, 4, 8, 10, 12, 14}.

The wireless relay device 30 may assume that a plurality of "repeater UL beam reference resources" are set. The maximum number of supported resources may be predefined, or may be indicated by capability information of the wireless relay device 30.

The wireless relay device 30 may assume that a repeater UL beam reference resource set is set. Each resource set is configured of a plurality of repeater UL beam reference resources. The maximum number of supported resource sets may be predefined, or may be indicated by capability information of the wireless relay device 30.

The maximum number of supported resources in one resource set may be predefined, or may be indicated by capability information of the wireless relay device 30.

The wireless relay device 30 may assume that the following parameters are set for each repeater UL beam reference resource/resource set by the side control information (RRC/MAC-CE/DCI).
·Resource ID/resource set ID
·Resource/resource set of which operation in the time domain, that is, resource type = {periodic, semi-persistent, aperiodic}
·Period of resource/resource set (for P/SP resource/resource set)
·Slot-level offset of resource/resource set
·Symbol position of the resource in the slot (including starting symbol and number of symbols)
·Uplink transmission beam in each resource

The wireless relay device 30 may be assumed to be activated/deactivated by side control information (RRC/MAC-CE/DCI) in the case of a semi-persistent resource/resource set. When the uplink transmission beam shown in the resource is activated, the wireless relay device 30 may use the activated beam to transfer the UL signal from the terminal 20 to the base station 10. When deactivated, the UL signal may not be transferred.

It may be assumed that the resource set ID/resource ID, and the activation/deactivation indication are included in the side control information.

The wireless relay device 30 may assume that the resource/resource set is triggered by side control information (RRC/MAC-CE/DCI) in the case of an aperiodic resource/resource set. In addition, the wireless relay device 30 may transfer the UL signal from the terminal 20 to the base station 10 by using the uplink transmission beam shown by the resource when triggered.

The wireless relay device 30 may assume that the resource ID/resource set ID is included in the side control information. Alternatively, the wireless relay device 30 may assume that the trigger state is included in the side control information. The wireless relay device 30 may assume that the trigger state is set for each resource/resource set.

The wireless relay device 30 may assume that the slot offset and the symbol location (including the start symbol and the number of symbols) of the resource in the slot are indicated by the control information on the trigger side.

According to the present example, the uplink transmission beam can be controlled based on the reference resource of the transmission beam of the wireless relay device 30.

### (Example 5)

In the present example, a specific method for setting an uplink transmission beam is described.

In Examples 2/3/4, for the time domain resource of the SRS resource of each terminal 20, an "uplink transmission beam" may be shown for each time unit and each "repeater UL beam reference resource". In the examples, the "uplink transmission beam" is shown as follows.

### <Option 1>

It may be an SRS resource of the wireless relay device 30. The option may be used, for example, in conjunction with Option 1 in Example 2.

When the SRS resource of the wireless relay device 30 is shown, the wireless relay device 30 may use the same uplink transmission spatial domain filter as that used to transmit the shown SRS resource.

### <Option 2>

It may be a downlink reference signal (SSB/CSI-RS) resource of a base station 10m (a downlink reference signal that is transmitted by the base station 10 and received by the wireless relay device 30). The option may be used, for example, in conjunction with Option 2 in Example 2.

When the downlink reference signal resource is shown, the wireless relay device 30 may use the same uplink transmission spatial domain filter as that used to receive the shown downlink reference signal resource.

### <Option 3>

It may be a repeater UL beam reference resource (as defined in Example 4). The option may be used, for example, in conjunction with Option 3-3 in Example 2.

If a repeater UL beam reference resource is shown, the wireless relay device 30 may use the same uplink transmission spatial domain filter as that used to transfer in the designated reference resource.

### <Option 4>

It may be an SRS resource of the terminal 20. The option may be used, for example, in conjunction with Option 3-2 in Example 2.

When the SRS resource of the terminal 20 is shown, the wireless relay device 30 may use the same uplink transmission spatial domain filter as that used to transfer the shown SRS resource of the terminal 20 in the time domain resource.

An association between the uplink transmission beam and the SRS resource of the terminal 20/the transmission beam of the terminal 20 is set. The association may depend on implementation of the wireless relay device 30 or may be fixed/predefined, or the SRS resource of the terminal 20/the transmission beam of the terminal 20 may be shown in the side control information. When the SRS resource of the terminal 20/the transmission beam of the terminal 20 is shown, the wireless relay device 30 may use the uplink transmission beam associated with the shown SRS resource of the terminal 20/the transmission beam of the terminal 20.

### <Option 5>

It may be a "TCI state" (or another term) associated with an SRS resource of the wireless relay device 30, a downlink reference signal (SSB/CSI-RS) resource of the base station 10, a repeater UL beam reference resource, or an SRS resource of the terminal 20.

When a "TCI state" is shown, the wireless relay device 30 may use the same spatial domain filter as that used for the reference resource associated with the shown TCI state (as Options 1 to 4).

### <Option 6>

It may be a "repeater uplink transmission spatial domain filter" (or another term) that directly refers to a spatial domain filter of the uplink transmission of the wireless relay device 30.

When a "repeater uplink transmission spatial domain filter" is indicated, the wireless relay device 30 may use a spatial domain filter of the designated uplink transmission.

The plurality of options described above may be supported. It may be assumed that which one or more options are applied is set. It may be assumed that one or more supported options are reported as capability information of the wireless relay device 30. Each option can be defined as a mandatory or optional function.

### (Modification 1)

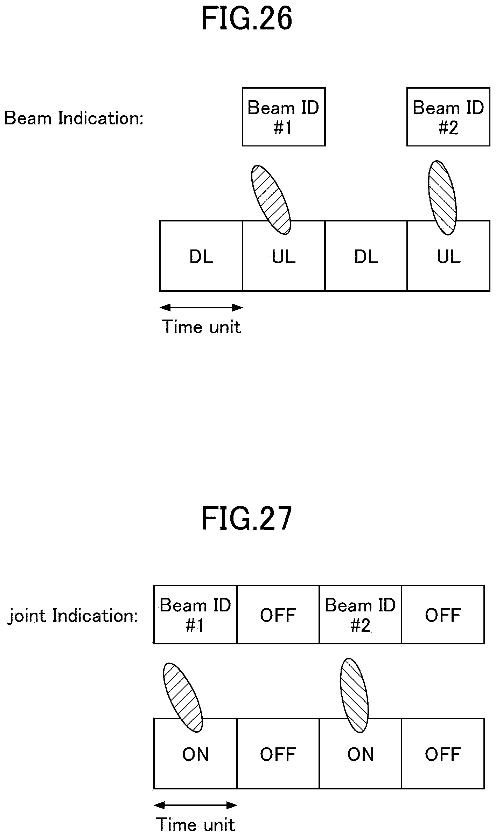

Fig. 26 is a diagram illustrating an uplink transmission beam according to Modification 1 of the embodiment of the present invention. Considering the DL-UL control of the wireless relay device 30, the beam indication of Example 3 may be applicable only to a UL time unit, for example, a time unit shown as UL or a time unit with at least one symbol in the time unit shown as UL. For example, if a series of beam IDs is shown for a series of time units, only UL time units may be counted.

### (Modification 2)

Fig. 27 is a diagram illustrating an uplink transmission beam according to Modification 2 of the embodiment of the present invention. Considering the ON/OFF control of the wireless relay device 30, the wireless relay device 30 may assume that a joint indication of a beam and ON/OFF is given. In some time units, instead of showing the beam ID, an indicator "OFF" can be shown. This means that the wireless relay device 30 does not transfer a signal in the current time unit.

### (Modification 3)

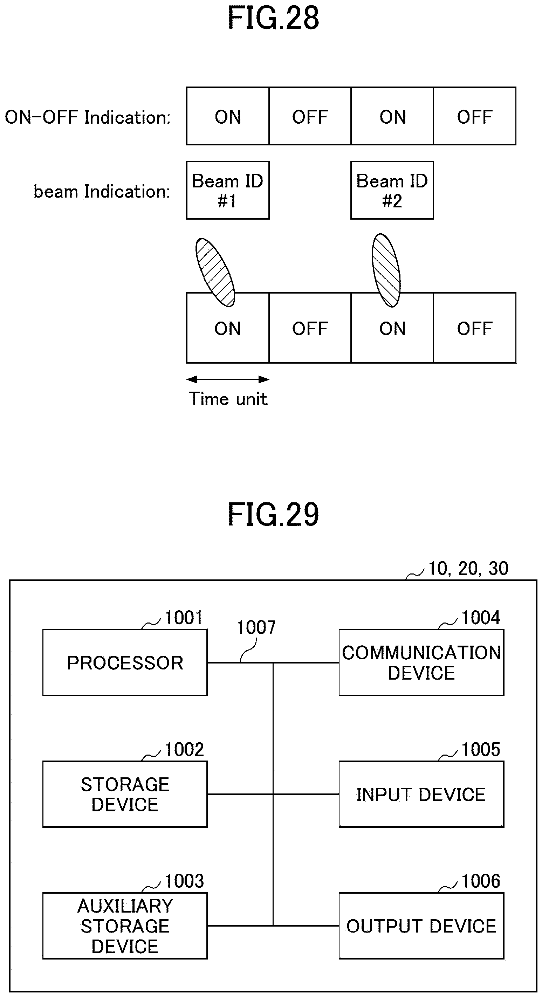

Fig. 28 is a diagram illustrating an uplink transmission beam according to Modification 3 of the embodiment of the present invention. The beam indication in Example 3 may be applied only to an on time unit, for example, a time unit shown as on or a time unit in which at least one symbol is shown as on (here, the beam and the ON-OFF indication are separate). For example, the wireless relay device 30 may assume that only an ON time unit is counted when a series of beam IDs is shown for a series of time units.

### (Modification 4)

Considering the power control of the wireless relay device 30, the wireless relay device 30 may assume that the power control parameter in the uplink transmission of the wireless relay device 30 is set for each uplink transmission beam.

Further, the following capability information of the wireless relay device 30 may be defined.
·Number of uplink transmission beams
·Whether the wireless relay device 30 supports network control of an uplink transmission beam used when it is necessary to amplify the UL signal of the terminal 20 and transfer the signal to the base station 10 (when the wireless relay device 30 is not scheduled to transmit the UL channel/RS by itself).

The wireless relay device 30 may report the above-described capability information to the base station 10, and may assume that an indication based on the reported capability information is given. Example 2 indicates that the capability information is supported by the wireless relay device 30, and may be applied only when a function indicated in the capability information is enabled by the base station 10.

According to the present example, the uplink transmission beam received by the wireless relay device 30 can be appropriately controlled by the network (for example, the base station 10).

The wireless relay device and the base station of the present embodiment may be configured as a wireless relay device and a base station described in the following sections. In addition, the following wireless relay method may be implemented.

### <Configuration Related to Present Embodiment>

### (Clause 1)

A wireless relay device including:
a communication unit that relays an uplink radio signal;
a receiving unit that receives, on a downlink, information indicating a transmission beam of the uplink radio signal; and
a control unit that determines the transmission beam of the uplink radio signal based on the information indicating the transmission beam of the uplink radio signal.

### (Clause 2)

The wireless relay device according to clause 1, wherein
the receiving unit receives, on a downlink, setting information related to measurement of quality of the transmission beam of the uplink radio signal, and
the control unit assumes that the quality of the transmission beam of the uplink radio signal is measured based on the setting information.

### (Clause 3)

The wireless relay device according to clause 1 or 2, wherein
the control unit assumes that information indicating a resource serving as a reference of a transmission beam is included in the information indicating the transmission beam of the uplink radio signal.

### (Clause 4)

The wireless relay device according to any one of clauses 1 to 3, further including:
a transmitting unit that transmits, on an uplink, capability information indicating whether to support a function of transmitting the transmission beam of the uplink radio signal based on the information indicating the transmission beam of the uplink radio signal.

### (Clause 5)

A base station including:
a communication unit that transmits an uplink radio signal to a wireless relay device;
a transmitting unit that transmits information indicating a transmission beam of the uplink radio signal to the wireless relay device; and
a control unit that assumes that the transmission beam of the uplink radio signal is determined based on the information indicating the transmission beam of the uplink radio signal.

### (Clause 6)

A wireless relay method executed by a wireless relay device, the method including:
a step of relaying an uplink radio signal;
a step of receiving, on a downlink, information indicating a transmission beam of the uplink radio signal; and
a step of determining the transmission beam of the uplink radio signal based on the information indicating the transmission beam of the uplink radio signal.

Any of the above configurations provides a technique that enables a wireless relay device to appropriately amplify and control a signal. According to clause 1, it is possible to achieve appropriate beam control in the reception of the uplink radio signal by the wireless relay device. According to clause 2, it can be assumed that the quality of the transmission beam of the uplink radio signal is measured based on the setting information. According to clause 3, it can be assumed that the information indicating the resource serving as the reference of the transmission beam is included in the information indicating the transmission beam of the uplink radio signal. According to clause 4, the capability information indicating whether the function of transmitting the transmission beam of the uplink radio signal is supported can be transmitted on the uplink based on the information indicating the transmission beam of the uplink radio signal.

### (Hardware Configuration)

The block diagram (Figs. 2, 3, and 4) used for the description of the above embodiment shows a block of a functional unit. The functional blocks (configuration units) are implemented by any combination of at least one of hardware and software. A method for implementing each functional block is not particularly limited. That is, each functional block may be implemented by using one physically or logically combined device, or may be implemented by directly or indirectly (for example, by using wired, wireless, or the like) connecting two or more physically or logically separated devices and using a plurality of the devices. The functional block may be implemented by combining software with the one device or the plurality of devices.

The functions include, but are not limited to, determining, determining, judging, calculating, computing, processing, deriving, investigating, searching, checking, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that functions to transmit is referred to as a transmitting unit or a transmitter. In any case, as described above, the implementation method is not particularly limited.

For example, the base station 10, the terminal 20, the wireless relay device 30, and the like in the embodiment of the present disclosure may function as a computer that performs processing of the wireless communication method of the present disclosure. Fig. 29 is a diagram illustrating an example of hardware configurations of the base station 10, the terminal 20, and the wireless relay device 30 according to the embodiment of the present disclosure. The base station 10, the terminal 20, and the wireless relay device 30 described above may be physically configured as a computer device including a processor 1001, a storage device 1002, an auxiliary storage device 1003, a communication device 1004, an input device 1005, an output device 1006, a bus 1007, and the like.

In the following description, the term "apparatus" can be replaced with a circuit, a device, a unit, or the like. The hardware configuration of the base station 10 and the terminal 20 may be configured to include one or a plurality of each device illustrated in the drawing, or may be configured without including some devices.

Each function in the base station 10, the terminal 20, and the wireless relay device 30 is implemented by causing predetermined software (program) to be loaded on hardware such as the processor 1001 and the storage device 1002 so that the processor 1001 performs calculation to control communication by the communication device 1004 and control at least one of reading and writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an operation device, a register, and the like. For example, the control unit 140, the control unit 240, and the like described above may be implemented by the processor 1001.

In addition, the processor 1001 reads a program (program code), a software module, data, or the like from at least one of the auxiliary storage device 1003 and the communication device 1004 to the storage device 1002, and executes various processes according to the read program or the like. As the program, a program that causes a computer to execute at least part of the operations described in the above-described embodiments is used. For example, the control unit 140 of the base station 10 illustrated in Fig. 2 may be implemented by a control program stored in the storage device 1002 and operated by the processor 1001. Furthermore, for example, the control unit 240 of the terminal 20 illustrated in Fig. 3 may be implemented by a control program stored in the storage device 1002 and operated by the processor 1001. Although it is described that the above-described various processes are executed by one processor 1001, the various processes may be executed simultaneously or sequentially by two or more processors 1001. The processor 1001 may be implemented by one or more chips. The program may be transmitted from a network via an electric communication line.

The storage device 1002 is a computer-readable recording medium, and may be configured of, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (main storage device), or the like. The storage device 1002 can store a program (program code), a software module, and the like that can be executed to implement the communication method according to the embodiment of the present disclosure.

The auxiliary storage device 1003 is a computer-readable recording medium, and may be configured of, for example, at least one of an optical disk such as a compact disk ROM (CD-ROM), a hard disk drive, a flexible disk, a magneto-optical disk (for example, a compact disc, a digital versatile disk, or a Blu-ray (registered trademark) disk), a smart card, a flash memory (for example, a card, a stick, or a key drive), a floppy (registered trademark) disk, a magnetic strip, and the like. The above-described storage medium may be, for example, a database, a server, or another appropriate medium including at least one of the storage device 1002 and the auxiliary storage device 1003.

The communication device 1004 is hardware (transmission/reception device) for performing communication between computers via at least one of a wired network and a wireless network, and is also referred to as, for example, a network device, a network controller, a network card, a communication module, or the like. The communication device 1004 may include a high-frequency switch, a duplexer, a filter, a frequency synthesizer, and the like to implement, for example, at least one of frequency division duplex (FDD) and time division duplex (TDD). For example, a transmission/reception antenna, an amplifier unit, a transmitting/receiving unit, a transmission/reception path interface, and the like may be implemented by the communication device 1004. The transmitting/receiving unit may be physically or logically separated into the transmitting unit and the receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs output to the outside. Note that the input device 1005 and the output device 1006 may be integrated (for example, a touch panel).

In addition, each device such as the processor 1001 and the storage device 1002 are connected by the bus 1007 for communicating information. The bus 1007 may be configured using a single bus or may be configured using different buses between the devices.

Furthermore, the base station 10 and the terminal 20 may be configured to include hardware such as a microprocessor, a digital signal processor (DSP), an application specific integrated circuit (ASIC), a programmable logic device (PLD), and a field programmable gate array (FPGA), and some or all of the functional blocks may be implemented by the hardware. For example, the processor 1001 may be implemented using at least one of the pieces of hardware.

Furthermore, the wireless relay device 30 may include a variable phase shifter, a phase shifter, an amplifier, an antenna, an array antenna, and the like as necessary as hardware configuring the variable unit 340 and the antenna unit 350.

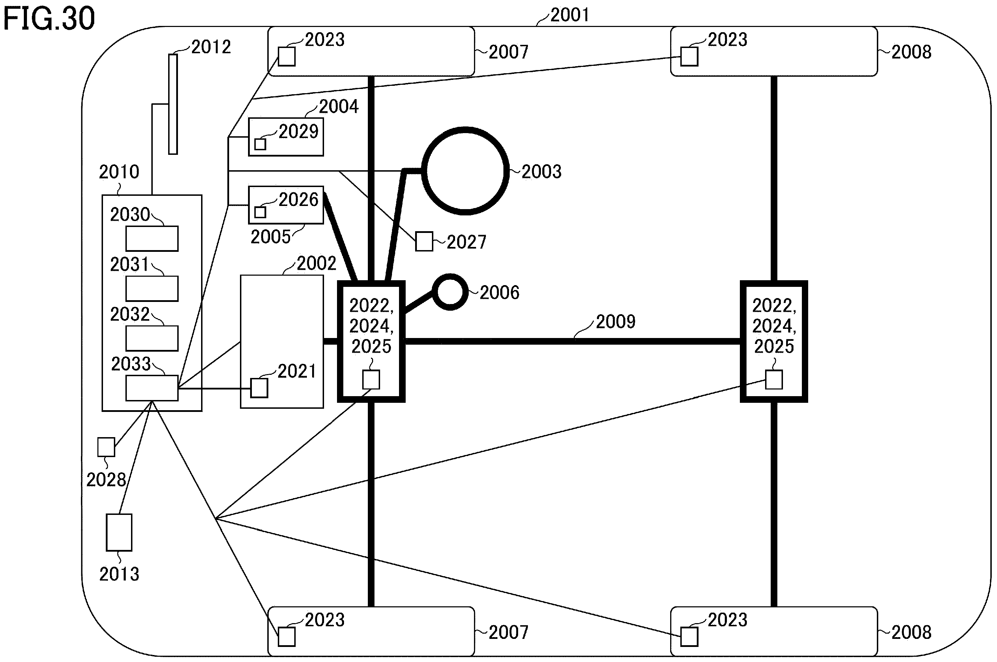

Fig. 30 illustrates a configuration example of a vehicle 2001. As illustrated in Fig. 30, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 is configured of, for example, an engine, a motor, or a hybrid of an engine and a motor. The steering unit 2003 includes at least a steering wheel (also referred to as a handle), and is configured to steer at least one of the front wheel and the rear wheel based on an operation of the steering wheel operated by the user.

The electronic control unit 2010 includes a microprocessor 2031, a memory (ROM, RAM) 2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

Examples of the signals from the various sensors 2021 to 2029 include a current signal from a current sensor 2021 that senses the current of the motor, a rotation speed signal of the front wheel and the rear wheel acquired by a rotation speed sensor 2022, an air pressure signal of the front wheel and the rear wheel acquired by an air pressure sensor 2023, a vehicle speed signal acquired by a vehicle speed sensor 2024, an acceleration signal acquired by an acceleration sensor 2025, a depression amount signal of the accelerator pedal acquired by an accelerator pedal sensor 2029, a depression amount signal of the brake pedal acquired by a brake pedal sensor 2026, an operation signal of the shift lever acquired by a shift lever sensor 2027, and a detection signal for detecting an obstacle, a vehicle, a pedestrian, and the like acquired by an object detection sensor 2028.

The information service unit 2012 is configured of various devices such as a car navigation system, an audio system, a speaker, a television, and a radio, in which the various devices provide (output) various types of information such as driving information, traffic information, and entertainment information, and one or more ECUs that control these devices. The information service unit 2012 provides various types of multimedia information and multimedia services to the occupant of the vehicle 2001 using information acquired from an external device via the communication module 2013 or the like.

The information service unit 2012 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that performs output to the outside.

A driving assistance system unit 2030 is configured of various devices for providing functions for preventing an accident in advance and reducing a driver's driving load, such as a millimeter wave radar, light detection and ranging (LiDAR), a camera, a positioning locator (For example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs for controlling the devices. The driving assistance system unit 2030 also transmits and receives various types of information via the communication module 2013 to implement a driving assistance function or an autonomous driving function.

The communication module 2013 can communicate with the microprocessor 2031 and components of the vehicle 2001 via the communication port. For example, the communication module 2013 transmits and receives data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensor 2021 to 29 provided in the vehicle 2001 via the communication port 2033.

The communication module 2013 is a communication device that can be controlled by the microprocessor 2031 of the electronic control unit 2010 and can communicate with an external device. For example, various types of information are transmitted and received to and from an external device via wireless communication. The communication module 2013 may be either inside or outside the electronic control unit 2010. The external device may be, for example, a base station, a mobile station, or the like.

The communication module 2013 may transmit at least one of the above-described signals from the various sensors 2021 to 2029 input to the electronic control unit 2010, information obtained based on the signals, and information based on an input from the outside (user) obtained via the information service unit 2012 to the external device via wireless communication. The electronic control unit 2010, the various sensors 2021 to 2029, the information service unit 2012, and the like may be referred to as input units that receive inputs. For example, PUSCH transmitted by the communication module 2013 may include information based on the above input.

The communication module 2013 receives various types of information (traffic information, signal information, inter-vehicle information, and the like) transmitted from an external device, and displays the information on the information service unit 2012 provided in the vehicle 2001. The information service unit 2012 may be called an output unit that outputs information (for example, information is output to a device such as a display or a speaker based on PDSCH (or data/information decoded from PDSCH) received by the communication module 2013).

The communication module 2013 also stores various types of information received from external devices in the memory 2032 available by the microprocessor 2031. The microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001 based on the information stored in the memory 2032.

### (Supplement to Embodiment)

Although the embodiments of the present invention are described above, the disclosed invention is not limited to such embodiments, and those skilled in the art will understand various modifications, changes, alternatives, substitutions, and the like. Although the description is given using specific numerical examples to facilitate understanding of the invention, the numerical values are merely examples, and any appropriate value may be used unless otherwise specified. The classification of items in the above description is not essential to the present invention, and details described in two or more items may be used in combination as necessary, or a detail described in a certain item may be applied to a detail described in another item (as long as there is no contradiction). A boundary of a functional unit or a processing unit in the functional block diagram does not necessarily correspond to a boundary of a physical component. The operation of a plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 are described using a functional block diagram, but such a device may be implemented in hardware, software, or a combination thereof. The software operated by the processor included in the base station 10 according to the embodiments of the present invention and the software operated by the processor included in the terminal 20 according to the embodiments of the present invention may be stored in any appropriate storage medium such as a random access memory (RAM), a flash memory, a read only memory (ROM), an EPROM, an EEPROM, a register, a hard disk (HDD), a removable disk, a CD-ROM, a database, or a server.

Furthermore, notification of information is not limited to the aspects/embodiments described in the present disclosure, and may be performed using other methods. For example, the notification of information may be performed by physical layer signaling (for example, downlink control information (DCI) and uplink control information (UCI)), upper layer signaling (for example, radio resource control (RRC) signaling and medium access control (MAC) signaling), broadcast information (master information block (MIB) and system information block (SIB)), other signals, or a combination thereof. Furthermore, RRC signaling may be referred to as RRC message, and may be, for example, RRC connection setup message, RRC connection reconfiguration message, or the like.

Each aspect/embodiment described in the present disclosure may be applied to at least one of systems using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), x-th generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), other appropriate systems, and next-generation systems extended, modified, created, and specified based on such systems. Also, a plurality of systems may be applied in combination (for example, a combination of at least one of LTE and LTE-A and 5G, and the like).

The order of the processing procedure, sequence, flowchart, and the like of each aspect/embodiment described in the present specification may be changed as long as there is no contradiction. For example, for the methods described in the present disclosure, elements of various steps are presented using an example order, and are not limited to the particular order presented.

The specific operation described as being performed by the base station 10 in the present specification may be performed by an upper node thereof in some cases. It is obvious that in a network including one or a plurality of network nodes having the base station 10, various operations performed for communication with the terminal 20 may be performed by at least one of the base station 10 and other network nodes (for example, MME, S-GW, or the like is conceivable, but is not limited thereto) other than the base station 10. Although a case where there is one other network node other than the base station 10 is exemplified above, the other network node may be a combination of a plurality of other network nodes (for example, MME and S-GW) .

Information, a signal, or the like described in the present disclosure can be output from an upper layer (or a lower layer) to a lower layer (or an upper layer). Input and output may be performed via a plurality of network nodes.

The input/output information and the like may be stored in a specific position (for example, memory) or may be managed using a management table. The input/output information and the like can be overwritten, updated, or additionally written. The output information and the like may be deleted. The input information and the like may be transmitted to another device.

The judgment in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean instructions, instruction sets, code, code segments, program code, programs, subprograms, software modules, applications, software applications, software packages, routines, subroutines, objects, executable files, execution threads, procedures, functions, and the like.

In addition, software, instruction, information, and the like may be transmitted and received via a transmission medium. For example, when software is transmitted from a website, server, or other remote source using at least one of a wired technology (a coaxial cable, an optical fiber cable, a twisted pair, a digital subscriber line (DSL), or the like) and a wireless technology (infrared rays, microwaves, or the like), at least one of the wired technology and the wireless technology is included within the definition of the transmission medium.

Information, a signal, and the like described in the present disclosure may be represented using any of a variety of different techniques. For example, data, instructions, commands, information, signals, bits, symbols, chips, and the like that may be mentioned throughout the above description may be represented by voltages, currents, electromagnetic waves, magnetic fields or magnetic particles, optical fields or optical photons, or any combination thereof.

Note that the terms described in the present disclosure and the terms necessary for understanding the present disclosure may be replaced with terms having the same or similar meanings. For example, at least one of a channel and a symbol may be a signal (signaling). A signal may also be a message. In addition, a component carrier (CC) may be referred to as a carrier frequency, a cell, a frequency carrier, or the like.

The terms "system" and "network" used in the present disclosure are used interchangeably.

In addition, information, parameter, and the like described in the present disclosure may be represented using an absolute value, may be represented using a relative value from a predetermined value, or may be represented using another piece of corresponding information. For example, a radio resource may be indicated by an index.

The names used for parameters described above are not limited in any respect. Furthermore, expressions and the like using the parameters may be different from those explicitly disclosed in the present disclosure. Since various channels (for example, PUCCH, PDCCH, and the like) and information elements can be identified by any suitable name, various names assigned to various channels and information elements are not in any way limitative names.

In the present disclosure, terms such as "base station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. A base station may also be referred to as a macro cell, a small cell, a femto cell, a pico cell, or the like.

A base station may accommodate one or a plurality of (for example, three) cells. When a base station accommodates a plurality of cells, an entire coverage area of the base station may be divided into a plurality of smaller areas, and each smaller area may also provide a communication service by a base station subsystem (for example, a small base station for indoor use (remote radio head (RRH))). The term "cell" or "sector" refers to a part or the whole of a coverage area of at least one of a base station and a base station subsystem that performs communication service in the coverage.

In the present disclosure, when a base station transmits information to a terminal, it may be read as that the base station instructs the terminal to perform control and operation based on the information.

In the present disclosure, terms such as "mobile station (MS)", "user terminal", "user equipment (UE)", and "terminal" can be used interchangeably.

The mobile station may also be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of a base station and a mobile station may be referred to as a transmission device, a reception device, a communication device, or the like. Note that at least one of a base station and a mobile station may be a device mounted on a moving object, the mobile object itself, or the like. A moving object refers to a movable object, and a moving speed is arbitrary. In addition, a case where a moving object is stopped is naturally included. A moving object includes, for example, a vehicle, a transport vehicle, an automobile, a motorcycle, a bicycle, a connected car, an excavator, a bulldozer, a wheel loader, a dump truck, a forklift, a train, a bus, a rear car, a human-powered vehicle, a ship and other watercraft, an airplane, a rocket, an artificial satellite, a drone (registered trademark), a multicopter, a quadcopter, a balloon, and objects mounted thereon, and is not limited thereto. Further, a moving object may be a moving object that autonomously travels based on an operation command. A moving object may be a vehicle (for example, a car, an airplane, or the like), a moving object moving unmanned (for example, a drone, an autonomous-driving vehicle, or the like), or a robot (manned type or unmanned type). Note that at least one of a base station and a mobile station includes a device that does not necessarily move during communication operation. For example, at least one of a base station and a mobile station may be an internet of things (IoT) device such as a sensor.

In addition, a base station in the present disclosure may be read as a user terminal. For example, each aspect/embodiment of the present disclosure may be applied to a configuration in which communication between a base station and a user terminal is replaced with communication between a plurality of terminals 20 (for example, the communication may be referred to as device-to-device (D2D), vehicle-to-everything (V2X), or the like). Here, the terminal 20 may have the function of the base station 10 described above. In addition, words such as "up" and "down" may be read as words corresponding to terminal-to-terminal communication (for example, "side"). For example, an uplink channel, a downlink channel, and the like may be replaced with a side channel.

Similarly, a user terminal in the present disclosure may be read as a base station. Here, the base station may have the function of the user terminal described above.

The terms "determining" and "determining" used in the present disclosure may encompass a wide variety of actions. The terms "determining" and "determining" may include, for example, a case in which "judging", "calculating", "computing", "processing", "deriving", "investigating", "looking up, search, inquiry" (for example, looking up, searching, or inquiring a table, a database, or another data structure), and "ascertaining" is deemed as "determining". Furthermore, the terms "determining" and "determining" may include a case in which "receiving" (for example, receiving information), "transmitting" (for example, transmitting information), "input", "output", and "accessing" (for example, accessing data in a memory) is deemed as "determining". Further, the terms "determining" and "determining" may include a case in which "resolving", "selecting", "choosing", "establishing", "comparing", and the like is deemed as "determining". In other words, the terms "determining" and "determining" may include a case in which a certain action or operation is deemed as "determining". Further, the term "determining (determining)" may be read as "assuming", "expecting", "considering", or the like.

The term "connected" or "coupled" or any variation thereof means any direct or indirect connection or coupling between two or more elements and may include the presence of one or more intermediate elements between two elements "connected" or "coupled" with each other. The coupling or connection between the elements may be physical, logical, or a combination thereof. For example, "connection" may be read as "access". As used in the present disclosure, two elements can be considered to be "connected" or "coupled" to each other using at least one of one or more wires, cables, and printed electrical connections and, as a number of non-limiting and non-inclusive examples, electromagnetic energy having wavelengths in a radio frequency region, a microwave region, and a light (both visible and invisible) region.

The reference signal may be abbreviated as RS (reference signal), or may be referred to as a pilot according to an applied standard.

As used in the present disclosure, the description "based on" does not mean "based only on" unless explicitly stated otherwise. In other words, the description "based on" means both "based only on" and "based at least on".

As used in the present disclosure, any reference to elements using designations such as "first", "second", and the like does not generally limit the amount or order of the elements. Such designations may be used in the present disclosure as a convenient way to distinguish between two or more elements. Thus, references to first and second elements do not imply that only two elements may be adopted or that the first element must in any way precede the second element.

The term "means" in the configuration of each device described above may be replaced with "unit", "circuit", "device", or the like.

Where the present disclosure uses the terms "include", "including", and variations thereof, the terms are intended to be inclusive in a manner similar to the term "comprising". Furthermore, the term "or" used in the present disclosure is intended not to be an exclusive OR.

A radio frame may be configured by one or a plurality of frames in a time domain. Each of one or a plurality of frames in the time domain may be referred to as a subframe. The subframe may further be configured by one or a plurality of slots in the time domain. The subframe may be a fixed time length (for example, 1 ms) that does not depend on numerology.

Numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), a number of symbols per TTI, a radio frame configuration, a particular filtering process performed by a transceiver in a frequency domain, a particular windowing process performed by a transceiver in a time domain, and the like.

A slot may be configured by one or a plurality of symbols (orthogonal frequency division multiplexing (OFDM) symbol, single carrier frequency division multiple access (SC-FDMA) symbol, and the like) in the time domain. A slot may be a time unit based on numerology.

A slot may include a plurality of mini-slots. Each mini-slot may be configured by one or a plurality of symbols in the time domain. Further, a mini-slot may be referred to as a sub-slot. A mini-slot may include a smaller number of symbols than a slot. PDSCH (or PUSCH) transmitted in a time unit larger than a mini-slot may be referred to as PDSCH (or PUSCH) mapping type A. PDSCH (or PUSCH) transmitted using a mini-slot may be referred to as PDSCH (or PUSCH) mapping type B.

Each of a radio frame, a subframe, a slot, a mini-slot, and a symbol represents a time unit when a signal is transmitted. Different names corresponding to a radio frame, a subframe, a slot, a mini-slot, and a symbol may be used.

For example, one subframe may be referred to as a transmission time interval (TTI), a plurality of consecutive subframes may be referred to as a TTI, and one slot or one mini-slot may be referred to as a TTI. That is, at least one of a subframe and a TTI may be a subframe (1 ms) in existing LTE, a period shorter than 1 ms (for example, 1 to 13 symbols), or a period longer than 1 ms. Note that a unit representing TTI may be referred to as a slot, a mini-slot, or the like instead of a subframe.

Here, TTI refers to, for example, a minimum time unit of scheduling in wireless communication. For example, in an LTE system, a base station performs scheduling of allocating radio resources (frequency bandwidth, transmission power, and the like that can be used in each terminal 20) to each terminal 20 in units of TTIs. Note that the definition of TTI is not limited thereto.

TTI may be a transmission time unit such as a channel coded data packet (transport block), a code block, or a code word, or may be a processing unit such as scheduling or link adaptation. Note that, when TTI is given, a time interval (for example, the number of symbols) in which a transport block, a code block, a code word, or the like is actually mapped may be shorter than TTI.

Note that, when one slot or one mini-slot is referred to as TTI, one or more TTIs (that is, one or more slots or one or more mini-slots) may be the minimum time unit of scheduling. Furthermore, the number of slots (the number of mini-slots) configuring the minimum time unit of scheduling may be controlled.

TTI with a time length of 1 ms may be referred to as normal TTI (TTI in LTE Rel.8-12), normal TTI, long TTI, a general subframe, a normal subframe, a long subframe, a slot, or the like. TTI shorter than normal TTI may be referred to as shortened TTI, short TTI, partial TTI (partial or fractional TTI), a shortened subframe, a short subframe, a mini-slot, a sub-slot, a slot, or the like.

Note that long TTI (for example, normal TTI, a subframe, or the like) may be read as TTI having a time length exceeding 1 ms, and short TTI (for example, shortened TTI or the like) may be read as TTI having TTI length less than TTI length of long TTI and equal to or greater than 1 ms.

A resource block (RB) is a resource allocation unit in the time domain and the frequency domain, and may include one or a plurality of consecutive subcarriers in the frequency domain. The number of subcarriers included in RB may be the same regardless of numerology, for example, may be 12. The number of subcarriers included in RB may be determined based on numerology.

In addition, the time domain of RB may include one or a plurality of symbols, and may be a length of one slot, one mini-slot, one subframe, or one TTI. Each of one TTI, one subframe, and the like may be configured by one or a plurality of resource blocks.

Note that one or a plurality of RBs may be referred to as a physical resource block (PRB), a sub-carrier group (SCG), a resource element group (REG), a PRB pair, an RB pair, or the like.

Furthermore, the resource block may be configured of one or a plurality of resource elements (REs). For example, one RE may be a radio resource area of one subcarrier and one symbol.

A bandwidth part (BWP) (may also be referred to as partial bandwidth or the like) may represent a subset of consecutive common resource blocks (RBs) for a certain numerology on a certain carrier. Here, the common RB may be specified by an index of RB based on a common reference point of the carrier. PRB may be defined by a certain BWP and numbered within the certain BWP.

BWP may include BWP for UL (UL BWP) and BWP for DL (DL BWP). One or a plurality of BWPs may be set in one carrier for the terminal 20.

At least one of the set BWPs may be active, and the terminal 20 may not assume that a predetermined signal/channel is transmitted and received outside the active BWPs. Note that "cell", "carrier", and the like in the present disclosure may be read as "BWP".

The above-described structures such as a radio frame, a subframe, a slot, a mini-slot, and a symbol are merely examples. For example, configurations such as the number of subframes included in a radio frame, the number of slots per subframe or radio frame, the number of mini-slots included in a slot, the number of symbols and RBs included in a slot or mini-slot, the number of subcarriers included in an RB, the number of symbols in a TTI, a symbol length, a cyclic prefix (CP) length, and the like can be variously changed.

In the present disclosure, for example, when articles such as "a", "an", and "the" in English are added by translation, the present disclosure may include a case where a noun following the articles is a plural form.

In the present disclosure, the term "A and B are different" may mean "A and B are different from each other". Note that the term may mean that "A and B are different from C". Terms such as "separated", "coupled" and the like may also be interpreted in the same manner as "different".

Each aspect/embodiment described in the present disclosure may be used alone, may be used in combination, or may be switched with execution. Furthermore, notification of predetermined information (for example, notification of "being X") is not limited to being performed explicitly, and may be performed implicitly (for example, the predetermined information is not notified).

Although the present disclosure is described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, the description of the present disclosure is for the purpose of illustration and does not have any restrictive meaning to the present disclosure.

### Reference Signs List

- 10: Base station
- 110: Transmitting unit
- 120: Receiving unit
- 130: Setting unit
- 140: Control unit
- 20: Terminal
- 210: Transmitting unit
- 220: Receiving unit
- 230: Setting unit
- 240: Control unit
- 1001: Processor
- 1002: Storage device
- 1003: Auxiliary storage device
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving assistance system unit
- 2031: Microprocessor
- 2032: Memory (ROM, RAM)
- 2033: Communication port (IO port)

## Claims

1. A wireless relay device comprising:
a communication unit that relays an uplink radio signal;
a receiving unit that receives, on a downlink, information indicating a transmission beam of the uplink radio signal; and
a control unit that determines the transmission beam of the uplink radio signal based on the information indicating the transmission beam of the uplink radio signal.

2. The wireless relay device according to claim 1, wherein
the receiving unit receives, on a downlink, setting information related to measurement of quality of the transmission beam of the uplink radio signal, and
the control unit assumes that the quality of the transmission beam of the uplink radio signal is measured based on the setting information.

3. The wireless relay device according to claim 1, wherein
the control unit assumes that information indicating a resource serving as a reference of a transmission beam is included in the information indicating the transmission beam of the uplink radio signal.

4. The wireless relay device according to claim 1, further comprising:
a transmitting unit that transmits, on an uplink, capability information indicating whether to support a function of transmitting the transmission beam of the uplink radio signal based on the information indicating the transmission beam of the uplink radio signal.

5. A base station comprising:
a communication unit that transmits an uplink radio signal to a wireless relay device;
a transmitting unit that transmits information indicating a transmission beam of the uplink radio signal to the wireless relay device; and
a control unit that assumes that the transmission beam of the uplink radio signal is determined based on the information indicating the transmission beam of the uplink radio signal.

6. A wireless relay method executed by a wireless relay device, the method comprising:
a step of relaying an uplink radio signal;
a step of receiving, on a downlink, information indicating a transmission beam of the uplink radio signal; and
a step of determining the transmission beam of the uplink radio signal based on the information indicating the transmission beam of the uplink radio signal.
